(19) **Europäisches Patentamt**

**European Patent Office**

**Office européen des brevets**

(11) **EP 1 095 357 B1**

(12) **EUROPEAN PATENT SPECIFICATION**

(45) Date of publication and mention
of the grant of the patent:
**22.05.2002 Bulletin 2002/21**

(21) Application number: **99933959.1**

(22) Date of filing: **13.07.1999**

(51) Int Cl.$^7$: **G06T 5/00**

(86) International application number:
**PCT/US99/15796**

(87) International publication number:
**WO 00/04497 (27.01.2000 Gazette 2000/04)**

(54) **AUTOMATIC MASKING OF OBJECTS IN IMAGES**

AUTOMATISCHE MASKIERUNG VON OBJEKTEN IN BILDERN

MASQUAGE AUTOMATIQUE D'OBJETS DANS DES IMAGES

(84) Designated Contracting States:
**AT BE CH CY DE DK ES FI FR GB GR IE IT LI LU
MC NL PT SE**

(30) Priority: **14.07.1998 US 92785 P
13.07.1999 US 351660**

(43) Date of publication of application:
**02.05.2001 Bulletin 2001/18**

(73) Proprietor: **PE Corporation (NY)
Foster City, CA 94404 (US)**

(72) Inventors:
• **DESIMAS, Bruce, E., II
Shelton, CT 06484 (US)**
• **LEVI, Jeff, A.
Trumbull, CT 06611 (US)**

(74) Representative: **Grünecker, Kinkeldey,
Stockmair & Schwanhäusser Anwaltssozietät
Maximilianstrasse 58
80538 München (DE)**

(56) References cited:
**WO-A-97/43732          US-A- 5 119 439
US-A- 5 901 245**

## Description

This invention relates to digital imaging, particularly boundary determination of objects in images, and more particularly such determination in optical analytical instruments.

BACKGROUND ART

Digital imaging has evolved with the advent of digital processing and digital image acquisition such as with video cameras, ultrasound imaging, robotic vision, scanning of optical images such as photographs, x-rays and radar images, and the like. One aspect of such imaging is masking or determination of boundaries of objects or areas of interest in images so as to allow analysis of the objects such as object identification or classification. Studies and developments in masking have included counting of blood cells and detection of foreign cells in blood, detection of specified objects in x-rays, and surface analysis in materials science.

US-A-5 119 439 discloses a method for extracting contour data of an image. A plurality of partial image sections which overlap each other are set along a contour line as to include a part of the contour line. The partial image sections are then binarized using a selected threshold level and the contour data of each of the partial image sections is then prepared by detecting a boundary of the binary image. To detect the boundary, a starting point is determined and the contour line is traced by reading values of neighboring pixels in a spiral form around the starting point.

In certain optical analytical instruments, light is received from a plurality of samples to effect separate image areas associated with the samples. The light may be transmitted through the samples, or may be emitted by the samples such as with fluorescence or chemiluminescence samples. An analysis is performed for each of the image areas. In chemiluminescence, light is emitted via a chemical reaction and may be detected with a luminometer. In fluorescence, for example, in an optical instrument for monitoring polymerase chain reaction production of DNA in a reaction apparatus, fluorescing dye is attached to double stranded DNA so as to produce fluorescence when excited with high energy light. Such an instrument is disclosed in co-pending provisional patent applications serial No. 60/085765 filed 16 May 1998, and serial No. 60/092784 filed July 14, 1998, filed as International Application No. PCT/US99/11088 on May 17, 1999, entitled "Instrument for Monitoring Polymerase Chain Reaction of DNA".

In such analytical instruments, light from the samples is focused on an array detector that effects an image formed of a low level background with light areas corresponding to the sample emissions, termed "areas of interest" (AOI) or "objects". The intensities of the objects correspond to the concentration of DNA or other sample material, and the intensities are processed by computer to provide such information. In order to allow the processing, it is necessary to identify boundaries for the areas of interest (AOI) in the image. Thus computer programming is needed to effect adaptive masking to accurately identify object areas from the image data.

There are three main categories in low-level vision or digital image processing, namely acquisition, manipulation and extraction. Acquisition includes sampling, digitization, storage and (optionally) compression. Manipulation includes enhancement (if required), segmentation and morphology. Extraction involves object representation and/or quantitation for the desired purpose. The present invention is particularly directed to segmentation which preliminarily defines object edges from grey-scale images, and extraction of the objects for higher level quantitation.

Successive steps for segmentation are thresholding and edge detection. A histogram is used to analyze intensities. (A "histogram" has ordinary meaning herein as a plot (or stored data equivalent) of frequency of each intensity vs. intensity for an image or section thereof.) A threshold intensity in a histogram separates the intensity clusters of objects and background. Once thresholds for each pixel are determined, object pixels can be identified and preliminary edges of the objects detected, subject to refinement, such as by morphological operations.

Thresholding is reviewed, for example, in an article "A Survey of Thresholding Techniques" by P. Sahoo, S. Saltani and A. Wong, Computer Graphics and Image Processing, 41, 233-260 (1988). In a conventional method, histogram data is fitted to curves such as a sum of two Gaussian curves (one for each cluster in a "bimodal" histogram), and a threshold intensity is determined stastically to minimize overlap areas. Another method for computing threshold is iterative selection taught in an article "Picture Thresholding Using an Iterative Selection Method" by T.W. Ridler and S. Calvard, IEEE Transactions on Systems, Man and Cybernetics, Vol. SMC-8. No. 8, Jan. 1978.

Yet another method is taught in an article "A Threshold Selection Method from Gray-Level Histograms" by N. Otsu. IEEE Transactions on Sytems, Man and Cybernetics, SMC-9, No. 1, Jan. 1979. This involves a criterion function that is selected to maximize the separation of the two pixel classes to give the best threshold. The function is derived from discriminant analysis.

The foregoing thresholding methods have been applied to entire images, to determine a "global threshold" which is adequate when all object and background pixels have well separated grey levels. For images with spatially varying object and/or background intensities, the global threshold may give poor results by returning too many erroneous object pixels in some regions and missing object pixels in others.

This problem is addressed in an article "Automatic Boundary Detection of the Left Ventricle from Cineangiograms" by C. Chow and T. Kaneko, Computers and Biomedical Research 5, 388-410 (1972), which teaches a method whereby the image is divided into a fixed number of overlapping regions. Histograms are selected for regions with large variances and appreciable bimodality. Thresholds from the center points of these regions are interpolated to all image points. Results are presented in the article to successfully demonstrate feasibility. However, the static selection criteria used therein must be defined somewhat arbitrarily, and implementation may be complex.

Another form of segmentation is edge detection. Several techniques have been used for identifying object boundaries or edges as taught, for example, in an article "A Survey of Edge Detection Techniques" by L. Davis, Computer Graphics and Image Processing, 4 248-270 (1975). A significant problem is pixel noise in the image, making the edges irregular and blurred.

One common method for edge detection involves derivatives, where a derivative is taken of the intensity across pixel location in an image to depict significant changes in intensity. A second derivative finds the center in a transition range of edge pixels. Variations include derivative operations in multiple directions, as implemented in the Sobel operator (Pratt, W., "Digital Image Processing", John Wiley and Sons, Inc.. New York, 1991, and Russ, John C., "The Image Processing Handbook", Second Ed., CRC Press, Boca Raton, 1994). A problem with derivatives is that the center of the transition range is not necessarily the exact edge because of uncertainties particularly due to noise.

A "Mexican hat filter" (Kurzweil, R., The Age of Intelligent Machines. Massachusetts Institute of Technology (1990)) has been developed to combine smoothing and edge detection using convolution techniques, as summarized, for example, in "Vision, A Computational Investigation into the Human Representation and Processing of Visual Information" by David Marr (W.H. Freeman and Co., N.Y. 1982)

Another category of segmentation is "region growing" in which an initial "seed" pixel is selected and subsequent pixels are added to the region as they qualify. A variation is to use "split and merge" where the image is successively split until each region is homogeneous. The image sub-regions are then merged if similar characteristics exist. There are advanced techniques for region growing but, again, noise is a problem. Also, in region growing, extensive computations are used which impacts performance in both running time and computer memory.

A common method for image processing used after segmentation is morphological operations. Morphological operations generally use a structuring system to define the object shape. One such operation is dilation which grows or dilates the target object, and another is erosion which removes pixels from the object. These may be combined in either "opening" which is performed by eroding followed by dilation, or "closing" which is dilation followed by erosion.

Contour following is the act of finding the boundary or border of an object, (Ballard, Dana H. and Brown, Christopher M., "Computer Vision", Prentice-Hall, Inc., Englewood Cliffs, New Jersey, 1982, and Pavlidis, T., "Algorithms for Graphics and Image Processing", Computer Science Press, Rockville, MD, 1982). In simple algorithms, changes in initial pixel locations may produce different borders. This is a disadvantage because it is desirable to find the exact border independent of the initial search pixel.

An objective of the invention is to provide a novel method and a novel means for establishing boundaries of objects in a stored digital image associated with pixels that define an image area. A particular objective is to provide such a method and a means for establishing boundaries automatically. Another objective is to provide such a method and a means for establishing boundaries in an optical instrument for analyzing a plurality of samples such as by fluorescence or chemiluminescence.

SUMMARY OF THE INVENTION

The foregoing and other objectives are achieved, at least in part, by a method for establishing boundaries of objects in a stored digital image associated with pixels that define an image area, each pixel having an associated intensity corresponding to background or an object in the image. Total intensity for a section of pixels is considered to be bimodal as representative of both background intensity and object intensity, or unimodal as representative of only background intensity or object intensity. The image area is divided into nonoverlapping blocks each formed of a plurality of pixels. Identification is made as to whether each block has unimodal intensity or bimodal intensity. A threshold is computed for each block having bimodal intensity, such that intensity on one side of the computed threshold is background intensity and on the other side of the computed threshold is object intensity. A block threshold is designated for each block, the block threshold for bimodal intensity being the computed threshold, and for unimodal intensity being an assigned threshold derived from neighboring block thresholds. A pixel threshold is derived for each pixel from block thresholds, preferably by interpolating a pixel threshold for each pixel from block thresholds. From the pixel threshold, each pixel is identified as having either an object intensity and a background intensity. A first value is assigned to each pixel having an object intensity, and a second value to each pixel having a background intensity, thereby converting image objects to binary objects. The binary objects are delineated to thereby establish the boundaries of the image objects.

In a preferred aspect, the image area has bimodal intensity, and the step of dividing the image area comprises n-fold (advantageously 4-fold) subdividing the image area into non-overlapping n-fold sections, and successively n-fold subdividing such sections a selected number of times until final sections define the blocks. Each set of n-fold sections is considered to be a set of child sections of a parent that itself is a section or is the image area. The step of designating an assigned threshold comprises identifying whether each section has unimodal intensity or bimodal intensity, computing thresholds for the image area and each section having bimodal intensity, and designating each computed threshold as a section threshold. The step of designating an assigned threshold further comprises, for each section having unimodal intensity in a set of n-fold sections, designating an average of the computed thresholds for other sections in the set if said other sections have bimodal intensity, and otherwise designating the threshold intensity of the parent of the set, the section thresholds being designated successively through successive subdividings until a block threshold is designated for each block.

Each pixel having the second value of intensity is deemed to be a background pixel, and each other pixel is an object pixel. In another preferred aspect, a search entity is defined mathematically as a combination of a pin, a rod pivotable on the pin, and a wheel attached to the rod approximately one pixel space from the pin. The pin is constrained to move among object pixels, and the wheel is constrained to move among background pixels. The step of delineating the binary objects comprises, in sequence, steps of searching, alternately moving the wheel and the pin and, if necessary skipping. Searching is effected in a first-hand direction from a comer of the image area (e.g. right to left from the upper right) to locate an initial object pixel, and the pin is placed on the initial pixel with the wheel in an adjacent background pixel. Unless constrained, and with the pin retained, the wheel is moved in a second-hand direction (e.g. clockwise) opposite from the first-hand direction until the wheel is constrained by an object pixel. Unless constrained, and with the wheel retained on its latest background pixel, the pin is moved in the first-hand direction (e.g. clockwise) to a next object pixel and, unless constrained, the pin is further moved until the pin is constrained by a background pixel. If the pin and the wheel are respectively constrained simultaneously by an adjacent object pixel and an adjacent background pixel, the wheel is skipped over the adjacent object pixel to a next background pixel. The steps of moving and (if necessary) skipping are repeated until the initial object pixel is reached. All pixels traversed by the pin are identified as boundary pixels, thereby delineating a binary object. The steps of searching, moving, identifying and skipping are further repeated until no further initial pixel is located, thereby delineating other binary objects.

Objectives are also achieved by an instrument receptive of light from a plurality of samples to effect separate image objects for analysis thereof. The instrument includes a processor for effecting such analysis, with the processor comprising means for effecting the foregoing steps.

Objects are further achieved by a computer readable storage medium for utilization with an instrument receptive of light from a plurality of samples to effect separate image objects for analysis thereof. The storage medium contains program code embodied therein so as to be readable by the processor, the program code including means for effecting the foregoing steps.

## BRIEF DESCRIPTION OF THE DRAWINGS

FIG. 1 is a schematic drawing of an instrument incorporating the invention.

FIG. 2 is an illustration of a computer screen display of an image area with objects corresponding to a plurality of light emitting samples with respect to the instrument of FIG. 1.

FIG. 3 is an idealized histogram of frequency vs. intensity for a section of an image area such as illustrated in FIG. 2, illustrating a threshold between background and object intensitics.

FIG. 4 is a schematic drawing of 4-fold subdividing of an image area such as in FIG. 2 into blocks.

FIG. 5 is a flow chart for determination of block thresholds and pixel thresholds utilizing a processor of the instrument of FIG. 1 and histograms such as in FIG. 3.

FIG. 6 is an illustration of a computer screen display of an image area showing block thresholds determined according to the flow chart of FIG. 5 for blocks effected according to the subdividing of FIG. 4.

FIG. 7 is a schematic drawing for a procedure of deriving pixel thresholds from block thresholds in an image area according to the flow chart of FIG. 5.

FIG. 8 is a computer screen display of an image area illustrating pixel thresholds determined according to the flow chart of FIG. 5.

FIG. 9 is a flow chart for determination of object binderies from pixel intensities and the pixel thresholds determined according to the flow chart of FIG. 8.

FIG. 10 is a flow chart for a delineation procedure of the flow chart of FIG. 9.

FIG. 11 is a schematic drawing of a portion of an image area illustrating a "pin-and-wheel" procedure utilized in the flow chart of FIG. 10.

## DETAILED DESCRIPTION OF THE PREFERRED EMBODIMENT

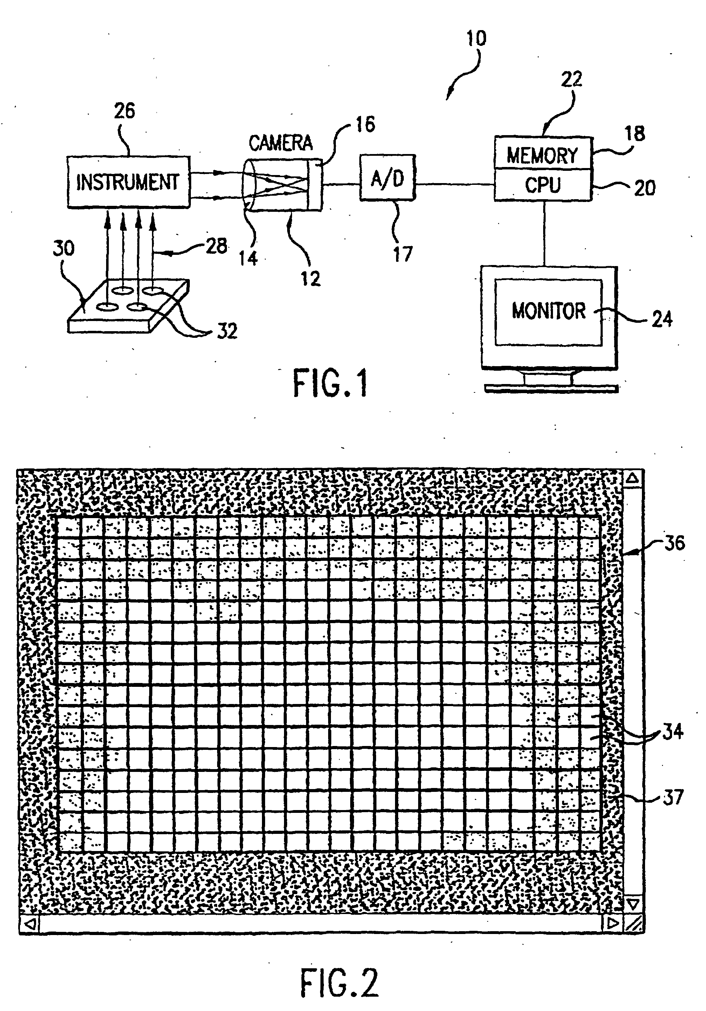

An apparatus 10 (FIG. 1) and method of the invention are generally useful for establishing boundaries of objects in a stored digital image associated with pixels that define an image area. The images are generally of the type that are acquired by a video camera 12 which has a lens 14 to focus an image onto an array detector 16. The detector may be, for example, a charge injection device (CID) or, preferably, a charge coupled device (CCD). A conventional video camera containing a CCD detector, a lens and associated electronics for the detector should be suitable, such as an Electrim model 1000L which has 751 active pixels horizontal and 242 (non-interlaced) active pixels vertical. This camera includes a circuit board that directly interfaces to a computer ISA bus. Analog/digital (A/D) interfacing **17** and framegrabber circuitry are in this circuit but may be provided separately. Essentially any other digital imaging device or subsystem may be used or adapted that is capable of taking still or freeze-frame images that are stored in memory **18,** e.g. in a linear representation, for processing by a processing unit (CPU) **20** in a computer **22** and display of a processed image or associated information on a monitor **24**. The raw image typically is stored in a linear representation where scan lines (rows) of pixels are held sequentially in memory. Image intensity for each pixel typically is stored as a byte or word of 8 or 16 bits respectively.

The invention is particularly advantageous with an optical analytical instrument **26** wherein light **28** is received from a plurality of samples **30** to effect separate image areas associated with the samples. Particularly of interest is an optical instrument for monitoring polymerase chain reaction production of DNA in a reaction apparatus, fluorescing dye is attached to double stranded DNA so as to produce fluorescence when excited with high energy light. Such an instrument is disclosed in the aforementioned co-pending provisional patent application serial No. 60/085765 filed 16 May 1998 [Attorney docket No. BT-4584] incorporated herein by reference in its entirety. The invention also is particularly useful for chemiluminescence analysis of multiple samples.

The DNA reaction apparatus has vials **32** as sample holders containing light-emitting sample material that effect a pattern of well defined regions **34** in the image area **36 (FIG. 2)** in a low intensity background **37**. The intensity in each region is processed to provide information on the samples such as concentration of DNA. In order to allow the processing, it is necessary to identify the areas of interest (AOI) in the image. The present invention utilizing computer programming is useful for automatic adaptive masking to accurately identify object areas from the image data, in which the shapes may be irregular and the shapes and background may have non-uniform illumination. The invention also should be more broadly useful for outlining objects in any image that may include scenery or the like.

The computer programming is conventional such as with C++ language. Adaptations of the programming for the present invention from flow charts and descriptions herein will readily be recognized and achieved by those skilled in the art. The flow charts represent means and steps for carrying out various aspects of the invention. Details of the computer and the programming are not important to the invention, and any conventional or other desired computer and programming components that would serve the purposes described herein should be deemed equivalent and interchangeable.

A conventional or other desired graphics program such as Image Pro Plus™ from Media Cybermetrics may be incorporated to display the image if desired. A Tagged Image File Format (TIFF), e.g. Adobe version 6.0 TIFF, is useful as it is well documented and in the public domain. A suitable development software package is Microsoft Visual C++ Developer Studio. Grey scale 8-bit and 16-bit programming should be used without compression (or with lossless compage ression), as a present goal is to identify object shape based on intensity and contrast.

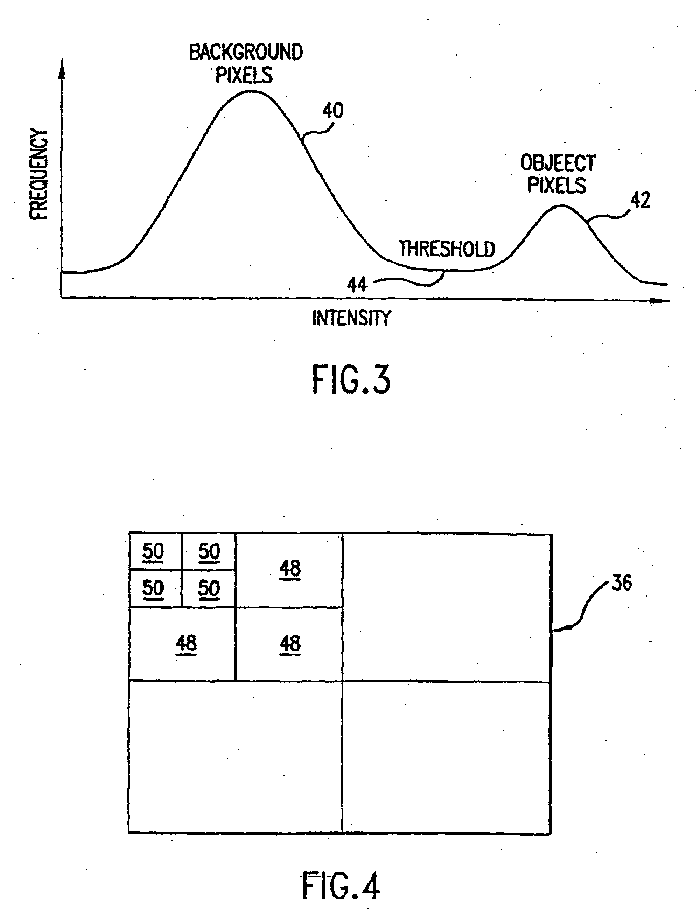

Each pixel has an associated intensity (brightness, represented digitally) corresponding to background or an object in the image. There also may be fluctuations due to noise. A group or section of pixels may be bimodal as representative of both background intensity and object intensity, or unimodal as representative of only background intensity or object intensity. Bimodal intensity of a region may be seen in a grey-scale histogram **38 (FIG. 3)** of frequency (number of pixels with a given intensity) against intensity. This histogram essentially is a combination of two bell shaped curves, one for background **40** and the other for an object **42.**

For the bimodal case, a threshold **44** is computed from the pixels in a selected region of the image, using a histogram, for use in classifying the intensity for each pixel in the region as either object or background. Any of a variety of methods of computing the threshold may be used.

One conventional method is minimizing error of classification which assumes two Gaussian distributions. A simplified form of this, useful for the present case, is to compute the half-way point between the two peaks using peak analysis. After smoothing, all peaks are found in the histogram. Then a two-stage hill-climbing method is used to identify the two major peaks corresponding to the "background" and "object" distributions. The background peak is identified as the highest peak at low intensity, as found by a search of peaks from left to right. The object peak is identified as the highest peak at high intensity, as found by a search of peaks from right to left. To deal with histogram noise and unwanted peaks, conventional boxcar smoothing (weighted average with all weights equal to 1/n) or the like may be used, with additional filtering of spurious peaks such as by data reduction if necessary as with 16-bit images. In 16-bit images, an initial histogram size may be 10 bits, with additional bits added if the raw histogram does not contain at least 64 bins. A test for bimodality should be performed, where two different peaks must be found and the valley must be lower than both peaks.

Another suitable method for computing the threshold is iterative selection taught in the aforementioned article by T.W. Ridler and S. Calvard. A preferred method is taught in the aforementioned article by N. Otsu, incorporated herein by reference in its entirety.

Unimodal intensity represents either background or an object, and "threshold" is zero representing "invalid". This will exist for a region small enough to encompass only an object or area of interest in a sample pattern, or a background area between objects or along the edge of the image. Procedures for dealing with this are described below.

In procedures to compute threshold values, the global (full) image area is sub-divided in a sequence of steps, advantageously utilizing quad-tree procedures **(FIG. 4)**. The image area **36** is fourfold subdivided into non-overlapping, fourfold sections **46** (i.e. with four sections in the image area) which preferably are dimensionally equal. These sections are similarly subdivided into four more sections **48** which may further be subdivided into more fourfold sections **50**. The successive fourfold subdividing is effected a selected number of times until a final pattern of sections constitute blocks of suitable size for analysis. (For clarity **FIG. 4** shows successive child subdivisions of only one parent. All parent sections are actually subdivided.) It was found that three subdivisions yielding 64 blocks is suitable for an intensity analysis of 96, 384 and 1536 objects (areas of interest, e.g. regions of sample luminescence). More subdivision is possible, but at some level the sections approach unimodal and the results become essentially the same, i. e. extra computations do not provide additional regional sensitivity.

The subdivisions may be visualized as the image area being a grandparent, the first sections being parents, the next sections being children or each of the parent sections, and subsequent sections being grandchildren. However, as termed herein and the claims, each set of fourfold sections are deemed to be child sections of a parent that is the image area or a section, in each pair of generation levels. Although fourfold subdivisions advantageously provide sufficient detail for the present purpose, others may be used such as twofold, threefold or eightfold; this is symbolized more broadly herein as "n-fold". Even more broadly, "n" may vary from level to level.

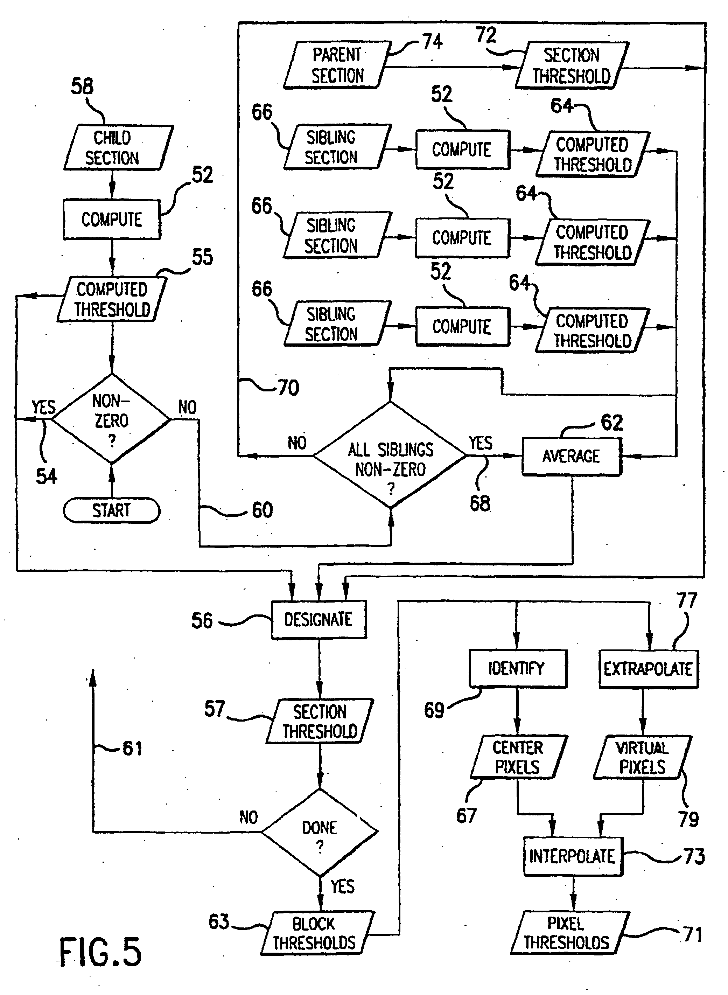

An initial threshold is computed **52 (FIG. 5)** for each section through the subdivisions including each final block. The computed threshold for unimodal intensity is zero, and for bimodal intensity is nonzero such that intensity on one side of the computed threshold is background intensity and on the other side of the computed threshold is object intensity. The zero or nonzero computation effectively identifies whether each block has unimodal intensity or bimodal intensity. Zero is designated as an invalid threshold and, substituted therefor, a section threshold is derived from neighboring thresholds (siblings). If there are enough near (siblings) with nonzero, an average of their thresholds should be suitable, otherwise the threshold of the parent is designated. (Zero may be substituted with another value different than any possible values for the bimodal intensity.)

After the computed thresholds are determined for all sections, section thresholds are designated successively through the successive subdivided sections until a block threshold is established for each final block. If the computed threshold **55** for a child section **58** being considered is nonzero **54** (bimodal), the computed threshold is designated **56** to be the section threshold **57**. If a computed threshold for the child section **58** is zero **60** (unimodal), the sibling sections **66** in its fourfold set are analyzed. If all of the computed thresholds **64** of the siblings are nonzero **68.** then the section threshold for the section **58** under consideration is designated **56** to be an average **62** of the computed thresholds for sibling sections in the set. Otherwise **70,** the previously-detennined section threshold **72** of the parent **74** is designated **56**. Although an average may be sufficient if only two of the other sections have nonzero threshold intensity, preferably the average is utilized only if all three of the other sections have nonzero threshold intensity. Similar procedures can be used for other types of "n-fold".

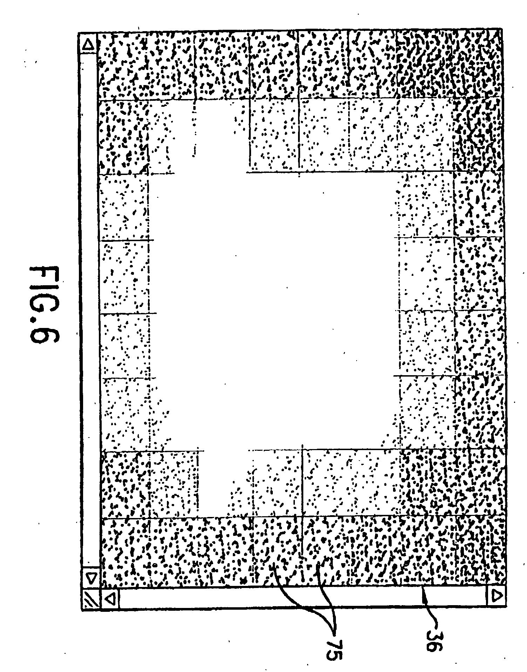

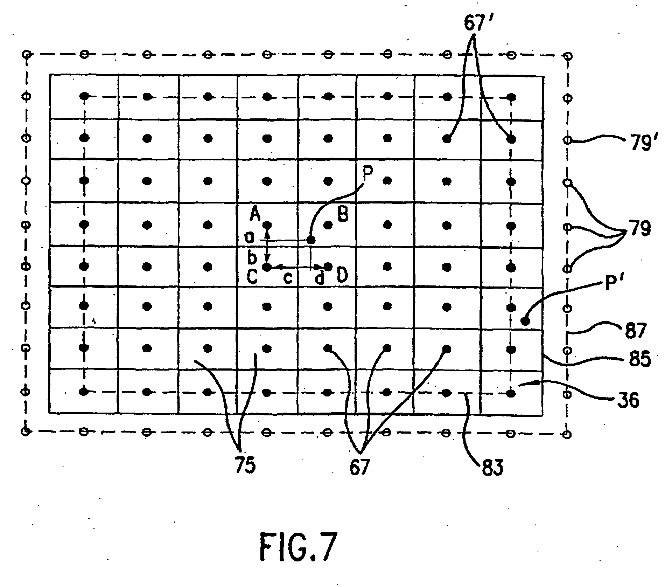

The procedures are repeated **61** until the section thresholds are determined down to the blocks, providing block thresholds **63. FIG. 6** shows possible block thresholds for a subdivision of 64 blocks **75** in an image area **36.** Effective pixel thresholds are derived from the block thresholds. The block thresholds maybe sufficient as pixel thresholds for certain applications. However, the block thresholds are stepped from block to block, and a comparison with **FIG. 2** reveals that such block thresholds could cause problems in distinguishing a larger number such as 96 objects. A further procedure **(FIGS. 5 & 7)** determines pixel thresholds having smoother variations.

It is assumed that the center pixel in each block has the block threshold. The center pixels **67** are identified **69,** e.g. from a rectangle computed from each block edge. Pixel thresholds **71** for all other pixels are established by interpolation **73** from the center values. Although higher order interpolation may be used, linear interpolation generally should be sufficient. For example, with each pixel **P** having a position within a rectangle having comers defined by four center pixels having thresholds **A, B, C, D,** a simple formula for the pixel threshold **PT** by interpolation is:

$$PT = ( bdA + bcB + adC + acD ) / ( a+b)(c+d)$$

where

    **A** = upper left threshold;
    **B** = upper right threshold;
    **C** = lower left threshold;
    **D** = lower right threshold;

and

**a** = distance down from **A** to pixel of interest;

**b** = distance up from **C** to pixel of interest;

**c =** distance to the right from **C** to pixel of interest;

**d** = distance to the left from **D** to pixel of interest.

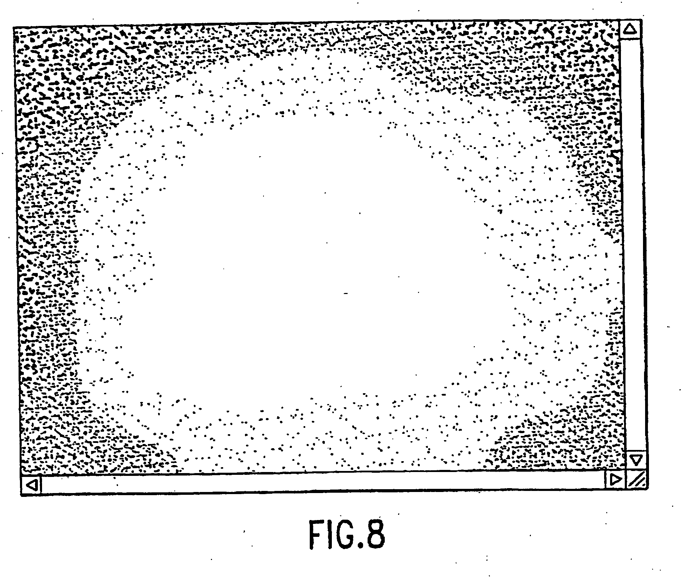

For pixels **P'** lying outside of an inner perimeter **83** defined by the center pixels nearest the boundary **85** of the image **36,** a set of virtual outside pixels **79** is established outside of the boundary. These outside pixels are spaced from their nearest pixels by the same distance as the spacings between neighboring center pixels within the image boundary, and thus lie on an outer perimeter **87** spaced a half block out from the image boundary The outside pixels are given thresholds by extrapolation **77** from one or more neighboring pixels; for example, an outside pixel **79'** may be given the same threshold as its nearest neighboring center pixel. Preferably a linear extrapolation is made from two adjacent center pixels **67'.** The four corner outside pixels may extrapolated diagonally. The interpolations for the pixels **P'** lying outside of the inner perimeter utilize the virtual pixels. **FIG. 8** shows a more uniformly varying pattern of pixel thresholds interpolated from the block thresholds of **FIG. 6.**

Alternatively, the thresholds for the outer pixels **P'** may be determined directly by extrapolation. As used in the claims, the term "interpolation" includes such extrapolation near the boundary.

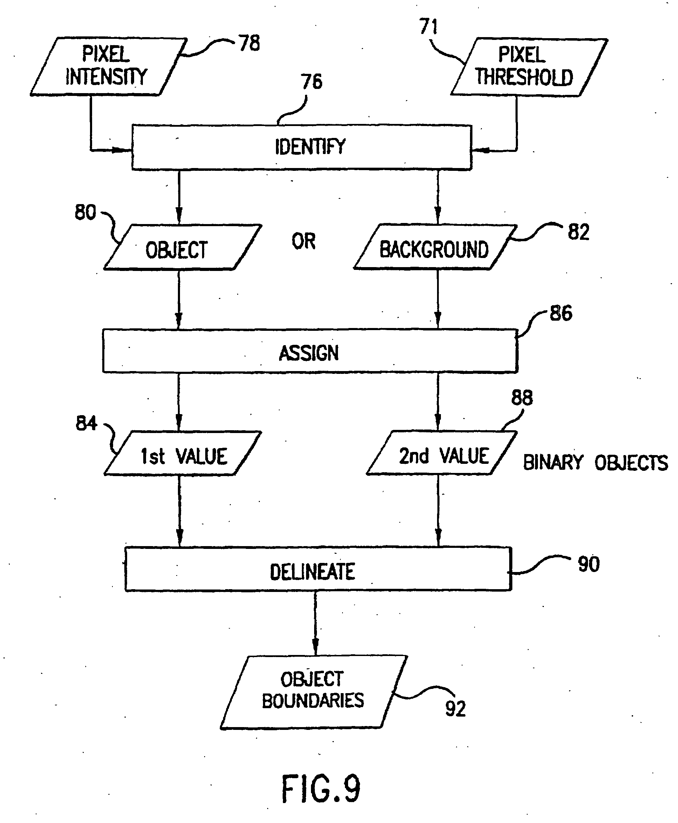

From the pixel threshold **71 (FIG. 9)** for each pixel, identification **76** is made as to whether its actual intensity **78** is either object **80** or background **82.** A first value **84** (e.g. 1) is assigned **86** to each pixel having an object intensity, and a second value **88** (e.g. 0) is assigned to each pixel having a background intensity, thereby converting image objects to binary objects. The assigned values are arbitrary. In the case of light emitting samples **(FIG. 2),** the objects will be brighter than the background. More generally, for other types of images, either could be brighter. The binary objects are then delineated **90,** and this delineation establishes the boundaries **92** of the image objects.

Generally the global image area should be bimodal for the foregoing procedures, although in some circumstances this may not be necessary. Also, the image intensities should have sufficiently smooth gradients across the blocks in the image to support the assumption that the center pixel in each block has a threshold equal to the block threshold. For these reasons, at least where the procedures are used for a fixed pattern of objects as with an instrument with light emitting areas, the edges of the fixed objects may be determined only once with a suitable image area. Once these are determined, all subsequent measurements may be made from the same delineated areas. Alternatively, if there is the possibility of area drift, a model pattern may be provided for periodic use in delineating the object areas. For cases not having a fixed pattern, such as for analyzing a photographic type of image, the number of subdivisions of sections may be increased until the block thresholds become mostly unimodal.

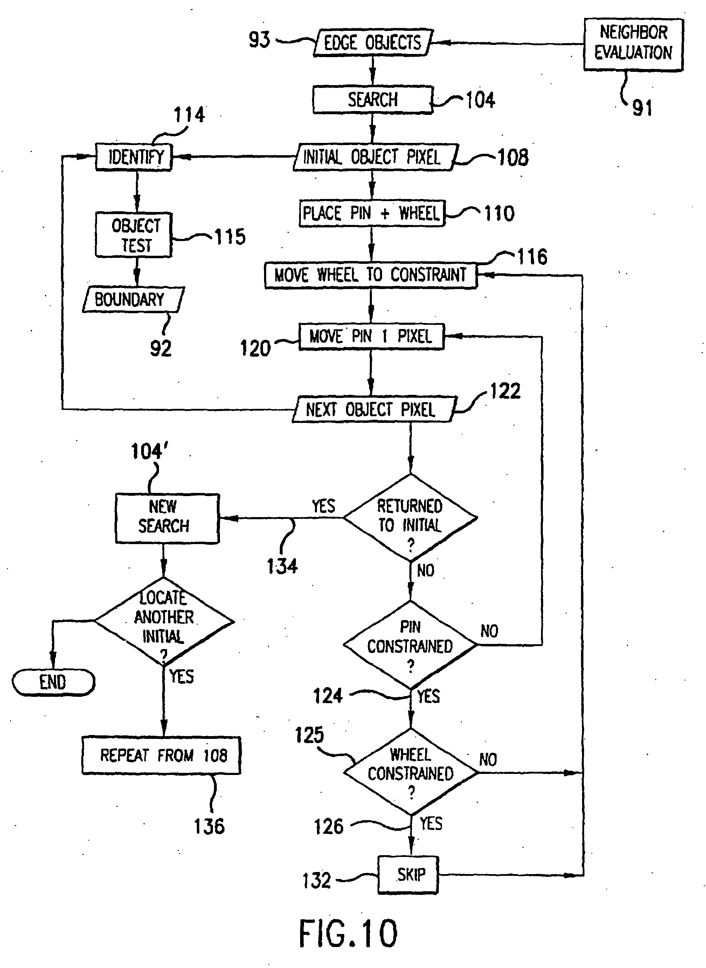

The delineation of binary objects, which otherwise may be made in any desired manner, should be consistent with the accuracy needed. In one delineation technique under the present invention, an initial neighbor evaluation is made to label every object pixel having at least one neighboring background pixel. The neighbors may be 4-connected boundary pixels of the object (4 neighbors excluding diagonals) or, preferably for reduced ambiguities, 8-connected (all 8 neighbors including diagonals). For the label, each such object pixel is assigned a third value (e.g. 2), thereby creating associated tertiary pixels that identify boundary objects. Another technique for delineation is a "pin-and-wheel" search described below. Advantageously both are used consecutively, with the 8-connected neighbor evaluation **91 (FIG. 10)** to preliminarily label boundary or edge objects **93** for a purpose of initial searching for starting points, followed by the pin-and-wheel to refine and record the boundaries.

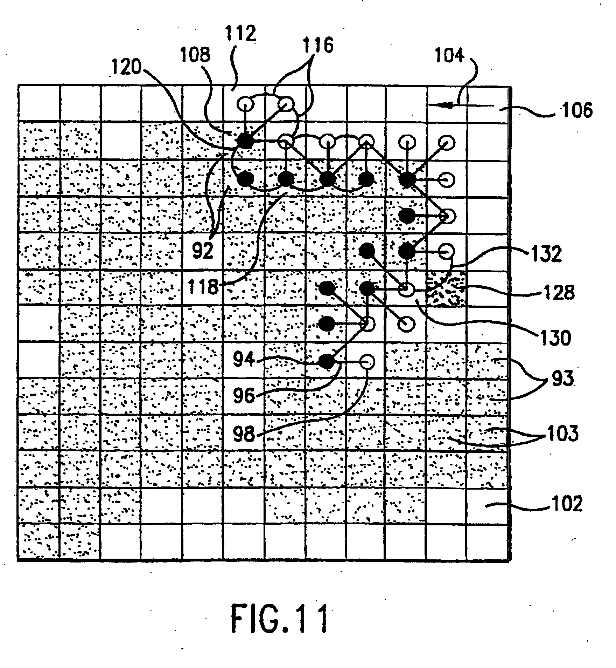

After the neighbor evaluation (if any), an initial scanning search **104 (FIGS. 10 & 11)** is made beginning in the upper right corner **106** of the image area, traversing leftward line by line until an initial object pixel **108** is located. If a neighbor evaluation **91** has preliminarily labeled edge (tertiary) objects **93,** only the latter are searched for. The reason is that such a search more readily allows subsequent searches for an initial object pixel for other objects, without sorting out pixels of objects already delineated by the pin-and-wheel technique.

For the pin-and-wheel technique, each pixel is considered to be either a background pixel **102** or an object pixel **103.** An object (non-background) pixel may have either the ordinary binary value (e.g. 1) or may be an object pixel labeled as a preliminary edge pixel **93** having a tertiary value (e.g. 2). A search entity is defined mathematically as a combination of a pin **94,** a rod **96** pivotable on the pin, and a wheel **98** attached to the rod approximately one pixel space from the pin. The pin is constrained to move only among object pixels, and the wheel is constrained to move only among background pixels.

The pin is placed **110** on the initial pixel with the wheel in an adjacent background pixel **112,** preferably above the pin for a right-to-left search, so as to ensure that the wheel is outside of the object. Unless the wheel is constrained (as indicated above), with the pin retained on the initial pixel, the wheel is moved **116** in a clockwise direction until the wheel is constrained by an object pixel **118.** Next, unless the pin is constrained, with the wheel retained on its latest background pixel, the pin is moved **120** counterclockwise to a next object pixel **122.** In a sort of walking motion (virtually by computer), the steps of moving the pin across object pixels are repeated until the pin is constrained **124** by a background pixel, and then the wheel is moved **116** again.

Occasionally, upon a detection test **125,** the pin and the wheel may both be found to be constrained simultaneously **126** by an adjacent object pixel **128** and an adjacent background pixel **130** respectively. In such case, the wheel is skipped **132** over the adjacent object pixel to a next background pixel **130,** and the alternating moving of the pin and the wheel are resumed **116, 120.**

The steps of moving and (as necessary) skipping are repeated until a return **134** to the initial object pixel **108** is effected. (If there is no return, the "object" is rejected as a non-entity.) Each object (non-background) pixel including the initial pixel traversed by the pin, whether or not a preliminary (tertiary) edge pixel, is identified **114** as a boundary pixel **92,** preferably subject to an object (area of interest) test to qualify the entire object as desirable, i.e. whether it is within a selected range of length or size. These boundary pixels have their locations stored for future use in analyzing the objects, for example analyzing intensity of fluorescent samples. The boundary pixels advantageously are given a fourth value (e.g. 3) replacing the original preliminary (tertiary) values which otherwise may be ignored or returned to the binary value (e.g. 1). The boundary pixels thereby delineate a binary object and consequently an actual object.

The scanning search **104'** is resumed to find an initial pixel for another object. The search is made easier by searching only for preliminary (tertiary) edge pixels not identified as actual boundaries already identified by pin-and-wheel. The steps of searching and applying pin and wheel are further repeated **136** to identify other binary objects until no further initial pixel is located. After all objects are found, the tertiary and fourth values may be returned to the binary value (e.g. 1). Alternatively the fourth values may be retained to allow display of the object boundaries.

It will be appreciated that the scanning search for an initial pixel for each object should be a grid search preferably beginning in any corner and going from right to left, left to right, etc. Similarly the wheel motion may be clockwise or counterclockwise. However, for the technique to be properly effective, there should be further restrictions including that the pin motion must be opposite from the wheel motion to achieve the "walk". Moreover the wheel motion should be "opposite" from the search direction, meaning if the search is in rows from right to left from the upper right (like an initial counterclockwise), then the wheel should be moved clockwise, and vice versa.

To generalize this situation, the term "first-hand direction" as used herein and in the claims refers to the initial searching direction which may be right to left in successive lines starting from the upper right, or left to right in successive lines starting from the lower left, or top to bottom in successive columns starting from the upper left, or bottom to top starting from the lower right; i.e. "counterclockwise" for the initial line or column search. Alternatively the first-hand direction may initially be "clockwise", e.g left to right from the upper left. The pin motion should always be this same "first-hand direction", i.e. counterclockwise if the search starts "counterclockwise", or clockwise if the search starts "clockwise". The term "second-hand direction" for the wheel means oppositely from the first-hand direction, i.e. clockwise if the initial search and wheel motion are counterclockwise, and vice versa. Although it is preferable for the search to begin at a corner, other search patterns may be suitable, in which case the term "first-hand direction" should be adapted accordingly and deemed equivalent and interchangeable to the foregoing patterns.

Although the foregoing description is directed particularly to masking of sample images in optical analytical instruments, the invention may be utilized in other fields. These include ultrasound imaging, robotic vision, scanning of optical images such as photographs, x-rays and radar images, counting of blood cells and detection of foreign cells in blood. The present techniques have also been applied to an ordinary image of a scene with people. Although the procedures described herein are advantageously computer automated, method steps may be initiated sequentially by an operator.

While the invention has been described above in detail with reference to specific embodiments, various changes and modifications which fall within the scope of the appended claims will become apparent to those skilled in this art. Therefore, the invention is intended only to be limited by the appended claims or their equivalents.

**Claims**

1. A method for establishing boundaries of objects in a stored digital image associated with pixels that define an image area, each pixel having an associated intensity corresponding to background or an object in the image, such that total intensity for a section of pixels is bimodal as representative of both background intensity and object intensity, or unimodal as representative of only background intensity or object intensity; the method comprising steps of:

   dividing the image area into nonoverlapping blocks (34) each formed of a plurality of pixels;

   identifying whether each block has unimodal intensity or bimodal intensity;

   computing a threshold (44) for each block having bimodal intensity, such that intensity on one side of the computed threshold is background intensity and on the other side of the computed threshold is object intensity;

   designating a block threshold for each block, the block threshold for bimodal intensity being the computed threshold, and for unimodal intensity being an assigned threshold derived from neighboring block thresholds;

deriving a pixel threshold (71) for each pixel from block thresholds (63);

identifying (76) from the pixel threshold (71) each pixel having an object intensity and each pixel having a background intensity, and assigning (86) a first value (84) to each pixel having an object intensity and a second value (88) to each pixel having a background intensity, thereby converting image objects to binary objects; and

delineating (90) the binary objects to thereby establish the boundaries (92) of the image objects.

2. The method of claim 1 wherein the step of deriving comprises interpolating a pixel threshold for each pixel from block thresholds.

3. The method of claim 1 wherein the image area has bimodal intensity, and wherein:

the step of dividing the image area comprises n-fold subdividing the image area into non-overlapping n-fold sections, and successively n-fold subdividing each of the sections a selected number of times until final sections define the blocks, each set of n-fold sections being a set of child sections of a parent that is the image area or a section;

the step of designating an assigned threshold comprises identifying whether each section has unimodal intensity or bimodal intensity, computing thresholds for the image area and each section having bimodal intensity, and designating each computed threshold as a section threshold; and

the step of designating an assigned threshold further comprises, for each section having unimodal intensity in a set of n-fold sections, designating an average of the computed thresholds for other sections in the set if said other sections have bimodal intensity, and otherwise designating the threshold intensity of the parent of the set, the section thresholds being designated successively through successive subdividings until a block threshold is designated for each block.

4. The method of claim 3 wherein the average of the computed thresholds for other sections in the set is designated only if all other sections in the set have nonzero threshold intensity.

5. The method of claim 3 wherein n-fold is fourfold.

6. The method of claim 1 wherein each pixel having the second value of intensity is a background pixel, each other pixel is an object pixel, and a search entity is defined mathematically as a combination of a pin, a rod pivotable on the pin, and a wheel attached to the rod approximately one pixel space from the pin, the pin being constrained to move among object pixels, and the wheel being constrained to move among background pixels, and the step of delineating the binary objects comprises, in sequence:

searching in a first-hand direction from a corner of the image area to locate an initial object pixel, and placing the pin on the initial pixel with the wheel in an adjacent background pixel;

unless constrained, and with the pin retained, moving the wheel in a second-hand direction opposite from the first-hand direction until the wheel is constrained by an object pixel;

unless constrained, and with the wheel retained on its latest background pixel, moving the pin in the first-hand direction to a next object pixel and, unless constrained, repeating the step of moving the pin until the pin is constrained by a background pixel;

if the pin and the wheel are respectively constrained simultaneously by an adjacent object pixel and an adjacent background pixel, skipping the wheel over the adjacent object pixel to a next background pixel;

repeating the steps of moving and skipping until the initial object pixel is reached;

identifying all pixels traversed by the pin as boundary pixels, thereby delineating a binary object; and

further repeating the steps of searching, moving, identifying and skipping until no further initial pixel is located, thereby delineating other binary objects.

7. The method of claim 6 wherein the step of searching comprises initially labeling as an edge pixel each object pixel having at least one neighboring background pixel, and searching only for edge pixels to locate an initial pixel.

8. The method of claim 7 wherein the boundary pixels of each binary object are identified before further searching for a next initial pixel, and the step of identifying comprises assigning a further value to each boundary pixel so as to remove associated edge pixels from the further searching.

9. The method of claim 8 further comprising reassigning each boundary pixel with the first value after no further initial pixel is located.

10. The method of claim 6 wherein the step of identifying comprises assigning a further value to each boundary pixel.

11. The method of claim 10 further comprising utilizing each further value to display boundary images.

12. An instrument (26) receptive of light (28) from a plurality of samples (32) to effect separate image objects for analysis thereof, the instrument including a processor (22) for effecting such analysis, the processor comprising:

   means (18) for storing the objects in a stored digital image associated with pixels that define an image area, each pixel having an associated intensity corresponding to background or an object in the image, such that total intensity for a section of pixels is bimodal as representative of both background intensity and object intensity, or unimodal as representative of only background intensity or object intensity;

   means for dividing the image area into nonoverlapping blocks (34) each formed of a plurality of pixels;

   means for identifying whether each block has unimodal intensity or bimodal intensity;

   means for computing a threshold (44) for each block having bimodal intensity, such that intensity on one side of the computed threshold is background intensity and on the other side of the computed threshold is object intensity;

   means for designating a block threshold for each block, the block threshold for bimodal intensity being the computed threshold, and for unimodal intensity being an assigned threshold derived from neighboring block thresholds;

   means for deriving a pixel threshold (71) for each pixel from block thresholds (63);

   means for identifying (76) from the pixel threshold (71) each pixel having an object intensity and each pixel having a background intensity, and assigning (86) a first value (84) to each pixel having an object intensity and a second value (88) to each pixel having a background intensity, thereby converting image objects to binary objects; and

   means for delineating (90) the binary objects to thereby establish the boundaries (92) of the image objects for analysis thereof.

13. The instrument of claim 12 wherein the means for deriving comprises means for interpolating a pixel threshold for each pixel from block thresholds.

14. The instrument of claim 12 wherein the image area has bimodal intensity, and wherein:

   the means for dividing the image area comprises means for n-fold subdividing the image area into non-overlapping n-fold sections, and successively n-fold subdividing each of the sections a selected number of times until final sections define the blocks, each set of n-fold sections being a set of child sections of a parent that is the image area or a section;

   the means for designating an assigned threshold comprises means for identifying whether each section has unimodal intensity or bimodal intensity, means for computing thresholds for the image area and each section having bimodal intensity, and means for designating each computed threshold as a section threshold; and

   the means for designating an assigned threshold further comprises, for each section having unimodal intensity in a set of n-fold sections, means for designating an average of the computed thresholds for other sections in the set if said other sections have bimodal intensity, and otherwise designating the threshold intensity of the parent of the set, the section thresholds being designated successively through successive subdividings until a block threshold is designated for each block.

15. The instrument of claim 14 wherein the average of the computed thresholds for other sections in the set is designated only if all other sections in the set have nonzero threshold intensity.

16. The instrument of claim 14 wherein n-fold is fourfold.

17. The instrument of claim 12 wherein each pixel having the second value of intensity is a background pixel, each other pixel is an object pixel, and a search entity is defined mathematically as a combination of a pin, a rod pivotabie on the pin, and a wheel attached to the rod approximately one pixel space from the pin, the pin being constrained to move among object pixels, and the wheel being constrained to move among background pixels, and the means for delineating the binary objects comprise, in sequence:

means for searching in a first-hand direction from a comer of the image area to locate an initial object pixel;

means for placing the pin on the initial pixel with the wheel in an adjacent background pixel;

means for moving the wheel in a wheel motion with the pin retained, the wheel motion being in a second-hand direction opposite from the first-hand direction until the wheel is constrained by an object pixel;

means for moving the pin in a pin motion with the wheel retained on its latest background pixel, the pin motion being in the first-hand direction to a next object pixel and, unless the pin is constrained, further moving the pin until the pin is constrained by a background pixel;

means for detecting whether the pin and the wheel are respectively constrained simultaneously by an adjacent object pixel and an adjacent background pixel, and, if the pin and the wheel are so constrained, means for skipping the wheel over the adjacent object pixel to a next background pixel;

means for repeating the pin motion and the wheel motion alternately, and the detecting and the skipping if simultaneous constraining is detected, until the initial object pixel is reached;

means for identifying all pixels traversed by the pin as boundary pixels, thereby delineating a binary object; and

means for further repeating the searching, the pin motion and the wheel motion, and the detecting and the skipping if simultaneous constraining is detected, and the identifying, until no further initial pixel is located, thereby delineating other binary objects.

18. The instrument of claim 17 wherein the means for searching comprise means for initially labeling as an edge pixel each object pixel having at least one neighboring background pixel, and means for searching only for edge pixels to locate an initial pixel.

19. The instrument of claim 18 wherein the boundary pixels of each binary object are identified before further searching for a next initial pixel, and the means for identifying comprise means for assigning a further value to each boundary pixel so as to remove associated edge pixels from the further searching

20. The instrument of claim 19 further comprising means for reassigning each boundary pixel with the first value after no further initial pixel is located.

21. The instrument of claim 17 wherein the means for identifying comprise means for assigning a further value to each boundary pixel.

22. The instrument of claim 21 further comprising means for utilizing each further value to display boundary images.

23. A computer readable storage medium for utilization with an instrument (26) receptive of light (28) from a plurality of samples (32) to effect separate image objects for analysis thereof, the instrument including a processor (22) for such analysis, the objects being stored in the processor in a stored digital image associated with pixels that define an image area, each pixel having an associated intensity corresponding to background or an object in the image, such that total intensity for a section of pixels is bimodal as representative of both background intensity and object intensity, or unimodal as representative of only background intensity or object intensity, and the storage medium having program code embodied therein so as to be readable by the processor, wherein the program code comprises:

means for dividing the image area into nonoverlapping blocks (34) each formed of a plurality of pixels;

means for identifying whether each block has unimodal intensity or bimodal intensity;

means for computing a threshold (44) for each block having bimodal intensity, such that intensity on one side of the computed threshold is background intensity and on the other side of the computed threshold is object intensity;

means for designating a block threshold for each block, the block threshold for bimodal intensity being the computed threshold, and for unimodal intensity being an assigned threshold derived from neighboring block thresholds;

means for deriving a pixel threshold (71) for each pixel from block threshold (63);

means for identifying (76) from the pixel threshold (71) each pixel having an object intensity and each pixel having a background intensity, and assigning (86) a first value (84) to each pixel having an object intensity and a second value (88) to each pixel having a background intensity, thereby converting image objects to binary objects; and

means for delineating (90) the binary objects to thereby establish the boundaries (92) of the image objects.

24. The storage medium of claim 23 wherein the means for deriving comprises means for interpolating a pixel threshold for each pixel from block thresholds.

25. The storage medium of claim 23 wherein the image area has bimodal intensity, and wherein:

the means for dividing the image area comprises means for n-fold subdividing the image area into non-overlapping n-fold sections, and successively n-fold subdividing each of the sections a selected number of times until final sections define the blocks, each set of n-fold sections being a set of child sections of a parent that is the image area or a section;

the means for designating an assigned threshold comprises means for identifying whether each section has unimodal intensity or bimodal intensity, means for computing thresholds for the image area and each section having bimodal intensity, and means for designating each computed threshold as a section threshold; and

the means for designating an assigned threshold further comprises, for each section having unimodal intensity in a set of n-fold sections, means for designating an average of the computed thresholds for other sections in the set if said other sections have bimodal intensity, and otherwise designating the threshold intensity of the parent of the set, the section thresholds being designated successively through successive subdividings until a block threshold is designated for each block.

26. The storage medium of claim 25 wherein the average of the computed thresholds for other sections in the set is designated only if all other sections in the set have nonzero threshold intensity.

27. The storage medium of claim 25 wherein n-fold is fourfold.

28. The storage medium of claim 23 wherein each pixel having the second value of intensity is a background pixel, each other pixel is an object pixel, and a search entity is defined mathematically as a combination of a pin, a rod pivotable on the pin, and a wheel attached to the rod approximately one pixel space from the pin, the pin being constrained to move among object pixels, and the wheel being constrained to move among background pixels, and the means for delineating the binary objects comprise, in sequence:

means for searching in a first-hand direction from a corner of the image area to locate an initial object pixel;

means for placing the pin on the initial pixel with the wheel in an adjacent background pixel;

means for moving the wheel in a wheel motion with the pin retained, the wheel motion being in a second-hand direction opposite from the first-hand direction until the wheel is constrained by an object pixel;

means for moving the pin in a pin motion with the wheel retained on its latest background pixel, the pin motion being in the first-hand direction to a next object pixel and, unless the pin is constrained, further moving the pin until the pin is constrained by a background pixel;

means for detecting whether the pin and the wheel are respectively constrained simultaneously by an adjacent object pixel and an adjacent background pixel, and, if the pin and the wheel are so constrained, means for skipping the wheel over the adjacent object pixel to a next background pixel;

means for repeating the pin motion and the wheel motion alternately, and the detecting and the skipping if simultaneous constraining is detected, until the initial object pixel is reached;

means for identifying all pixels traversed by the pin as boundary pixels, thereby delineating a binary object; and

means for further repeating the searching, the pin motion and the wheel motion, and the detecting and the skipping if simultaneous constraining is detected, and the identifying, until no further initial pixel is located, thereby delineating other binary objects.

29. The storage medium of claim 28 wherein the means for searching comprise means for initially labeling as an edge pixel each object pixel having at least one neighboring background pixel, and means for searching only for edge pixels to locate an initial pixel.

30. The storage medium of claim 29 wherein the boundary pixels of each binary object are identified before further searching for a next initial pixel, and the means for identifying comprise means for assigning a further value to each boundary pixel so as to remove associated edge pixels from the further searching.

31. The storage medium of claim 30 further comprising means for reassigning each boundary pixel with the first value after no further initial pixel is located.

32. The storage medium of claim 28 wherein the means for identifying comprise means for assigning a further value to each boundary pixel.

33. The storage medium of claim 29 further comprising means for utilizing each further value to display boundary images.

**Patentansprüche**

1. Verfahren zum Einrichten von Grenzen von Objekten in einem gespeicherten, digitalen Bild, zugeordnet zu Pixeln, die einen Bildbereich definieren, wobei jedes Pixel eine zugeordnete Intensität entsprechend einem Hintergrund oder einem Objekt in dem Bild besitzt, so dass die gesamte Intensität für einen Abschnitt von Pixeln bimodal als repräsentativ für sowohl eine Hintergrund-Intensität als auch eine Objekt-Intensität oder unimodal als repräsentativ für nur eine Hintergrund-Intensität oder eine Objekt-Intensität ist, wobei das Verfahren die Schritte aufweist:

Unterteilen des Bildbereichs in sich nicht überlappende Blöcke (34), wobei jeder aus einer Mehrzahl von Pixeln gebildet ist;
Identifizieren, ob jeder Block eine unimodale Intensität oder eine bimodale Intensität besitzt;
Berechnen eines Schwellwerts (44) für jeden Block, der eine bimodale Intensität besitzt, so dass die Intensität auf einer Seite des berechneten Schwellwerts eine Hintergrund-Intensität ist und auf der anderen Seite des berechneten Schwellwerts eine Objekt-Intensität ist;
Bezeichnen eines Block-Schwellwerts für jeden Block, wobei der Block-Schwellwert für eine bimodale Intensität der berechnete Schwellwert ist und für eine unimodale Intensität ein zugeordneter Schwellwert, abgeleitet von benachbarten Block-Schwellwerten, ist;
Ableiten eines Pixel-Schwellwerts (71) für jedes Pixel von den Block-Schwellwerten (63);
Identifizieren (76) jedes Pixels, das eine Objekt-Intensität besitzt, und jedes Pixel, das eine Hintergrund-Intensität besitzt von dem Pixel-Schwellwert (71), und Zuordnen (86) eines ersten Werts (84) zu jedem Pixel, das eine Objekt-Intensität besitzt, und eines zweiten Werts (88) zu jedem Pixel, das eine Hintergrund-Intensität besitzt, um dadurch Bildobjekte in binäre Objekte umzuwandeln; und
Skizzieren (90) der binären Objekte, um dadurch die Grenzen (92) der Bildobjekte einzurichten.

2. Verfahren nach Anspruch 1, wobei der Schritt eines Ableitens ein Interpolieren eines Pixel-Schwellwerts für jedes Pixel von Block-Schwellwerten aufweist.

3. Verfahren nach Anspruch 1, wobei der Bildbereich eine bimodale Intensität besitzt, und wobei:

der Schritt eines Unterteilens des Bildbereichs ein n-faches Unterteilen des Bildbereichs in sich nicht überlappende n-fache Abschnitte und ein darauffolgendes n-faches Unterteilen jedes der Abschnitte eine ausgewählte Anzahl von Malen, bis Endabschnitte die Blöcke definieren, aufweist, wobei jeder Satz von n-fachen Abschnitten ein Satz von Kind-Abschnitten eines Elternteils ist, der der Bildbereich oder ein -Abschnitt ist;
der Schritt eines Bezeichnens eines zugeordneten Schwellwerts ein Identifizieren, ob jeder Abschnitt eine unimodale Intensität oder eine bimodale Intensität besitzt, ein Berechnen von Schwellwerten für den Bildbereich und jeden Abschnitt, der eine bimodale Intensität besitzt, und ein Bezeichnen jedes berechneten Schwellwerts als ein Abschnitt-Schwellwert aufweist; und
der Schritt eines Bezeichnens eines zugeordneten Schwellwerts weiterhin, für jeden Abschnitt, der eine unimodale Intensität in einem Satz von n-fachen Abschnitten besitzt, ein Bezeichnen eines Durchschnitts der berechneten Schwellwerte für andere Abschnitte in dem Satz, falls die anderen Abschnitte eine bimodale Intensität besitzen, und ansonsten Bezeichnen der Schwellwert-Intensität des Elternteils des Satzes, aufweist, wobei die Abschnitt-Schwellwerte aufeinanderfolgend über aufeinanderfolgende Unterteilungen bezeichnet werden, bis ein Block-Schwellwert für jeden Block bezeichnet ist.

4. Verfahren nach Anspruch 3, wobei der Durchschnitt der berechneten Schwellwerte für andere Abschnitte in dem Satz nur dann bezeichnet wird, wenn alle anderen Abschnitte in dem Satz eine Nicht-Null-Schwellwert-Intensität haben.

5. Verfahren nach Anspruch 3, wobei das n-fache das Vierfache ist.

6. Verfahren nach Anspruch 1, wobei jedes Pixel, das den zweiten Wert einer Intensität besitzt, ein Hintergrund-Pixel ist, wobei jedes andere Pixel ein Objekt-Pixel ist, und wobei ein Such-Gegenstand mathematisch als eine Kombination eines Stifts, eines Stabs, schwenkbar an dem Stift, und eines Rads, befestigt an dem Stab ungefähr einen Pixel-Raum von dem Stift entfernt, definiert ist, wobei der Stift so eingeschränkt ist, um sich unter Objekt-Pixeln zu bewegen, und das Rad so eingeschränkt ist, um sich unter Hintergrund-Pixeln zu bewegen, und der Schritt eines Skizzierens der binären Objekte, in Folge, aufweist:

Suchen in einer ersten Richtung von einer Ecke des Bildbereichs aus, um ein Anfangs-Objekt-Pixel zu lokalisieren, und Platzieren des Stifts an dem Anfangs-Pixel mit dem Rad in einem angrenzenden Hintergrund-Pixel;
ohne Einschränkung, und mit dem Stift beibehalten, Bewegen des Rads in einer zweiten Richtung entgegengesetzt zu der ersten Richtung, bis das Rad durch ein Objekt-Pixel eingeschränkt ist;
ohne Einschränkung, und mit dem Rad auf seinem letzten Hintergrund-Pixel beibehalten, Bewegen des Stifts in der ersten Richtung zu einem nächsten Objekt-Pixel, und, ohne Einschränkung, Wiederholen des Schritts eines Bewegens des Stifts, bis der Stift durch ein Hintergrund-Pixel eingeschränkt ist;
falls der Stift und das Rad jeweils simultan durch ein angrenzendes Objekt-Pixel und ein angrenzendes Hintergrund-Pixel eingeschränkt sind, Springen mit dem Rad über das angrenzende Objekt-Pixel zu einem nächsten Hintergrund-Pixel;
Wiederholen der Schritte eines Bewegens und Überspringens, bis das Anfangs-Objekt-Pixel erreicht ist;
Identifizieren aller Pixel, überquert durch den Stift, als Grenz-Pixel, um dadurch ein binäres Objekt zu skizzieren; und
weiteres Wiederholen der Schritte eines Suchens, Bewegens, Identifizierens und Überspringens, bis kein weiteres Anfangs-Pixel lokalisiert ist, um dadurch andere, binäre Objekte zu skizzieren.

7. Verfahren nach Anspruch 6, wobei der Schritt eines Suchens ein anfängliches Kennzeichnen als ein Kanten-Pixel von jedem Objekt-Pixel, das mindestens ein benachbartes Hintergrund-Pixel besitzt, und Suchen nur nach Kanten-Pixel, um ein anfängliches Pixel zu lokalisieren, aufweist.

8. Verfahren nach Anspruch 7, wobei die Grenz-Pixel jedes binären Objekts vor einem weiteren Suchen nach einem nächsten Anfangs-Pixel identifiziert werden, und der Schritt eines Identifizierens ein Zuordnen eines weiteren Werts zu jedem Grenz-Pixel aufweist, um so zugeordnete Kanten-Pixel von der weiteren Suche zu entfernen.

9. Verfahren nach Anspruch 8, das weiterhin ein erneutes Zuordnen jedes Grenz-Pixels zu dem ersten Wert, nachdem kein weiteres Anfangs-Pixel lokalisiert ist, aufweist.

10. Verfahren nach Anspruch 6, wobei der Schritt eines Identifizierens ein Zuordnen eines weiteren Werts zu jedem Grenz-Pixel aufweist.

11. Verfahren nach Anspruch 10, das weiterhin ein Verwenden jedes weiteren Werts, um Grenzbilder anzuzeigen, aufweist.

12. Instrument (26), das Licht (28) von einer Mehrzahl von Proben (32) aufnimmt, um separate Bild-Objekte für eine Analyse davon zu erzielen, wobei das Instrument einen Prozessor (22) zum Erzielen einer solchen Analyse umfasst, wobei der Prozessor aufweist:

eine Einrichtung (18) zum Speichern der Objekte in einem gespeicherten, digitalen Bild, das den Pixeln zugeordnet ist, die einen Bildbereich definieren, wobei jedes Pixel eine zugeordnete Intensität besitzt, entsprechend zu einem Hintergrund oder einem Objekt in dem Bild, sodass die gesamte Intensität für einen Abschnitt von Pixeln bimodal als repräsentativ für sowohl eine Hintergrund-Intensität als auch eine Objekt-Intensität oder unimodal als repräsentativ für nur eine Hintergrund-Intensität oder für eine Objekt-Intensität ist; eine Einrichtung zum Unterteilen des Bildbereichs in sich nicht überlappende Blöcke (34), jeder gebildet aus einer Mehrzahl von Pixeln;
eine Einrichtung zum Identifizieren, ob jeder Block eine unimodale Intensität oder eine bimodale Intensität besitzt;
eine Einrichtung zum Berechnen eines Schwellwerts (44) für jeden Block, der eine bimodale Intensität besitzt, sodass eine Intensität auf einer Seite des berechneten Schwellwerts eine Hintergrund-Intensität und auf der anderen Seite des berechneten Schwellwerts eine Objekt-Intensität ist;

eine Einrichtung zum Bezeichnen eines Block-Schwellwerts für jeden Block, wobei der Block-Schwellwert für eine bimodale Intensität der berechnete Schwellwert ist und für eine unimodale Intensität ein zugeordneter Schwellwert ist, der von benachbarten Block-Schwellwerten abgeleitet ist;
eine Einrichtung zum Ableiten eines Pixel-Schwellwerts (71) für jedes Pixel von Block-Schwellwerten (63);
eine Einrichtung zum Identifizieren (76) jedes Pixels, das eine Objekt-Intensität besitzt, und jedes Pixel, das eine Hintergrund-Intensität besitzt von dem Pixel-Schwellwert (71), und Zuordnen (86) eines ersten Werts (84) zu jedem Pixel, das eine Objekt-Intensität besitzt, und eines zweiten Werts (88) zu jedem Pixel, das eine Hintergrund-Intensität besitzt, um dadurch Bildobjekte zu binären Objekten umzuwandeln; und
eine Einrichtung zum Skizzieren (90) der binären Objekte, um dadurch die Grenzen (92) der Bildobjekte für eine Analyse davon einzurichten.

13. Instrument nach Anspruch 12, wobei die Einrichtung zum Ableiten eine Einrichtung für ein Interpolieren eines Pixel-Schwellwerts für jedes Pixel von Block-Schwellwerten aufweist.

14. Instrument nach Anspruch 12, wobei der Bildbereich eine bimodale Intensität besitzt, und wobei:

die Einrichtung zum Unterteilen des Bildbereichs eine Einrichtung für ein n-faches Unterteilen des Bildbereichs in sich nicht überlappende, n-fache Abschnitte und ein darauffolgendes, n-faches Unterteilen jedes der Abschnitte eine ausgewählte Anzahl von Malen, bis End-Abschnitte die Blöcke definieren, aufweist, wobei jeder Satz von n-fachen Abschnitten ein Satz von Kind-Abschnitten eines Elternteils ist, der der Bildbereich oder ein Abschnitt ist;
die Einrichtung zum Bezeichnen eines zugeordneten Schwellwerts eine Einrichtung zum Identifizieren, ob jeder Abschnitt eine unimodale Intensität oder eine bimodale Intensität besitzt, eine Einrichtung zum Berechnen von Schwellwerten für den Bildbereich und jeden Abschnitt, der eine bimodale Intensität besitzt, und eine Einrichtung zum Bezeichnen jedes berechneten Schwellwerts als ein Abschnitt-Schwellwert aufweist; und
die Einrichtung zum Bezeichnen eines zugeordneten Schwellwerts weiterhin, für jeden Abschnitt, der eine unimodale Intensität in einem Satz von n-fachen Abschnitten besitzt, eine Einrichtung zum Bezeichnen eines Durchschnitts der berechneten Schwellwerte für andere Abschnitte in dem Satz, falls die anderen Abschnitte eine bimodale Intensität haben, und ansonsten Bezeichnen der Schwellwert-Intensität des Elternteils des Satzes aufweist, wobei die Abschnitt-Schwellwerte aufeinanderfolgend durch aufeinanderfolgendes Unterteilen bezeichnet werden, bis ein Block-Schwellwert für jeden Block bezeichnet ist.

15. Instrument nach Anspruch 14, wobei der Durchschnitt der berechneten Schwellwerte für andere Abschnitte in dem Satz nur bezeichnet wird, wenn alle anderen Abschnitte in dem Satz eine Nicht-Null-Schwellwert-Intensität haben.

16. Instrument nach Anspruch 14, wobei das n-fache das Vierfache ist.

17. Instrument nach Anspruch 12, wobei jedes Pixel, das den zweiten Wert einer Intensität besitzt, ein Hintergrund-Pixel ist, wobei jedes andere Pixel ein Objekt-Pixel ist, und ein Such-Gegenstand mathematisch als eine Kombination eines Stifts, eines Stabs, schwenkbar an dem Stift, und eines Rads, befestigt an dem Stab ungefähr einen Pixel-Raum von dem Stift entfernt, definiert ist, wobei der Stift so eingeschränkt ist, um sich unter Objekt-Pixeln zu bewegen, und das Rad so eingeschränkt ist, um sich unter Hintergrund-Pixeln zu bewegen, und die Einrichtung zum Skizzieren der binären Objekte, in Folge, aufweist:

eine Einrichtung zum Suchen in einer ersten Richtung von einer Ecke des Bildbereichs aus, um ein Anfangs-Objekt-Pixel zu lokalisieren;
eine Einrichtung zum Platzieren des Stifts auf dem Anfangs-Pixel mit dem Rad in einem angrenzenden Hintergrund-Pixel;
eine Einrichtung zum Bewegen des Rads in einer Rad-Bewegung mit dem Stift beibehalten, wobei die Rad-Bewegung in einer zweiten Richtung entgegengesetzt der ersten Richtung vorliegt, bis das Rad durch ein Objekt-Pixel eingeschränkt wird;
eine Einrichtung zum Bewegen des Stifts in einer Stift-Bewegung mit dem Rad auf seinem letzten Hintergrund-Pixel beibehalten, wobei die Stift-Bewegung in der ersten Richtung zu einem nächsten Objekt-Pixel vorliegt, und, ohne dass der Stift eingeschränkt ist, weiteres Bewegen des Stifts, bis der Stift durch ein Hintergrund-Pixel eingeschränkt ist;
eine Einrichtung zum Erfassen, ob der Stift und das Rad jeweils simultan durch ein angrenzendes Objekt-Pixel und ein angrenzendes Hintergrund-Pixel eingeschränkt sind, und, falls der Stift und das Rad so eingeschränkt sind, eine Einrichtung zum Springen mit dem Rad über das angrenzende Objekt-Pixel zu einem nächsten Hintergrund-Pixel;

eine Einrichtung zum Wiederholen der Stift-Bewegung und der Rad-Bewegung alternierend, und Erfassen und Überspringen, falls simultan eine Einschränkung erfasst wird, bis das Anfangs-Objekt-Pixel erreicht ist;

eine Einrichtung zum Identifizieren aller Pixel, überquert durch den Stift, als Grenz-Pixel, um dadurch ein binäres Objekt zu skizzieren; und eine Einrichtung für ein weiteres Wiederholen des Suchens, der Stift-Bewegung und der Rad-Bewegung, und der Erfassung und des Überspringens, falls eine simultane Einschränkung erfasst wird, und des Identifizierens, bis kein weiteres Pixel lokalisiert ist, um dadurch andere, binäre Objekte zu skizzieren.

18. Instrument nach Anspruch 17, wobei die Einrichtung zum Suchen eine Einrichtung für ein anfängliches Kennzeichnen als ein Kanten-Pixel, jedes Objekt-Pixel, das mindestens ein benachbartes Hintergrund-Pixel besitzt, und eine Einrichtung zum Suchen nur nach Kanten-Pixeln, um ein Anfangs-Pixel zu lokalisieren, aufweist.

19. Instrument nach Anspruch 18, wobei die Grenz-Pixel jedes binären Objekts vor einem weiteren Suchen nach einem nächsten Anfangs-Pixel identifiziert werden, und die Einrichtung zum Identifizieren einer Einrichtung zum Zuordnen eines weiteren Werts zu jedem Grenz-Pixel aufweist, um so zugeordnete Kanten-Pixel von der weiteren Suche zu entfernen.

20. Instrument nach Anspruch 19, das weiterhin eine Einrichtung zum erneuten Zuordnen jedes Grenz-Pixels zu dem ersten Wert, nachdem kein weiteres Anfangs-Pixel lokalisiert ist, aufweist.

21. Instrument nach Anspruch 17, wobei die Einrichtung zum Identifizieren eine Einrichtung zum Zuordnen eines weiteren Werts zu jedem Grenz-Pixel aufweist.

22. Instrument nach Anspruch 21, das weiterhin eine Einrichtung zum Verwenden jedes weiteren Werts, um Grenz-Bilder anzuzeigen, aufweist.

23. Ein mittels Computer lesbares Speichermedium zur Verwendung in Verbindung mit einem Instrument (26), das Licht (28) von einer Mehrzahl von Proben (32) aufnimmt, um separate Bild-Objekte für eine Analyse davon zu erzielen, wobei das Instrument einen Prozessor (22) für eine solche Analyse aufweist, wobei die Objekte in dem Prozessor in einem gespeicherten, digitalen Bild, zugeordnet zu Pixeln, die einen Bildbereich definieren, gespeichert werden, wobei jedes Pixel eine zugeordnete Intensität entsprechend einem Hintergrund oder einem Objekt in dem Bild besitzt, sodass die gesamte Intensität für einen Abschnitt von Pixeln bimodal als repräsentativ für sowohl eine Hintergrund-Intensität als auch eine Objekt-Intensität ist, oder unimodal als repräsentativ für nur eine Hintergrund-Intensität oder eine Objekt-Intensität ist, und wobei das Speichermedium einen Programm-Code, der darin eingeschlossen ist, besitzt, um so durch den Prozessor lesbar zu sein, wobei der Programm-Code aufweist:

eine Einrichtung zum Unterteilen des Bildbereichs in sich nicht überlappende Blöcke (34), jeder gebildet aus einer Mehrzahl von Pixeln; eine Einrichtung zum Identifizieren, ob jeder Block eine unimodale Intensität oder eine bimodale Intensität besitzt;

eine Einrichtung zum Berechnen eines Schwellwerts (44) für jeden Block, der eine bimodale Intensität besitzt, sodass eine Intensität auf einer Seite des berechneten Schwellwerts eine Hintergrund-Intensität ist und auf der anderen Seite des berechneten Schwellwerts eine Objekt-Intensität ist;

ein Einrichtung zum Bezeichnen eines Block-Schwellwerts für jeden Block, wobei der Block-Schwellwert für eine bimodale Intensität der berechnete Schwellwert ist und für eine unimodale Intensität ein zugeordneter Schwellwert ist, abgeleitet von benachbarten Block-Schwellwerten;

eine Einrichtung zum Ableiten eines Pixel-Schwellwerts (71) für jedes Pixel von Block-Schwellwerten (63);

eine Einrichtung zum Identifizieren (76) jedes Pixels, das eine Objekt-Intensität besitzt, und jedes Pixel, das eine Hintergrund-Intensität besitzt von dem Pixel-Schwellwert (71), und Zuordnen (86) eines ersten Werts (84) zu jedem Pixel, das eine Objekt-Intensität besitzt, und eines zweiten Werts (88) zu jedem Pixel, das eine Hintergrund-Intensität besitzt, um dadurch Bild-Objekte in binäre Objekte umzuwandeln; und

eine Einrichtung zum Skizzieren (90) der binären Objekte, um dadurch die Grenzen (92) der Bild-Objekte einzurichten.

24. Speichermedium nach Anspruch 23, wobei die Einrichtung zum Ableiten eine Einrichtung für ein Interpolieren eines Pixel-Schwellwerts für jedes Pixel von Block-Schwellwerten aufweist.

25. Speichermedium nach Anspruch 23, wobei der Bildbereich eine bimodale Intensität besitzt, und wobei:

die Einrichtung zum Unterteilen des Bildbereichs eine Einrichtung für ein n-faches Unterteilen des Bildbereichs in sich nicht überlappende, n-fache Abschnitte und ein darauffolgendes, n-faches Unterteilen jedes der Abschnitte eine ausgewählte Anzahl von Malen, bis End-Abschnitte die Blöcke definieren, aufweist, wobei jeder Satz von n-fachen Abschnitten ein Satz von Kind-Abschnitten eines Elternteils ist, der der Bildbereich oder ein Abschnitt ist;

die Einrichtung zum Bezeichnen eines zugeordneten Schwellwerts eine Einrichtung zum Identifizieren, ob jeder Abschnitt eine unimodale Intensität oder eine bimodale Intensität besitzt, eine Einrichtung zum Berechnen von Schwellwerten für den Bildbereich und jeden Abschnitt, der eine bimodale Intensität besitzt, und eine Einrichtung zum Bezeichnen jedes berechneten Schwellwerts als ein Abschnitt-Schwellwert aufweist; und

die Einrichtung zum Bezeichnen eines zugeordneten Schwellwerts weiterhin, für jeden Abschnitt, der eine unimodale Intensität in einem Satz von n-fachen Abschnitten besitzt, eine Einrichtung zum Bezeichnen eines Durchschnitts der berechneten Schwellwerte für andere Abschnitte in dem Satz, falls die anderen Abschnitte eine bimodale Intensität haben, und ansonsten Bezeichnen der Schwellwert-Intensität des Elternteils des Satzes aufweist, wobei die Abschnitt-Schwellwerte aufeinanderfolgend über ein aufeinanderfolgendes Unterteilen, bis ein Block-Schwellwert für jeden Block bezeichnet ist, bezeichnet werden.

26. Speichermedium nach Anspruch 25, wobei der Durchschnitt der berechneten Schwellwerte für andere Abschnitte in dem Satz nur dann bezeichnet wird, wenn alle anderen Abschnitte in dem Satz eine Nicht-Null-Schwellwert-Intensität haben.

27. Speichermedium nach Anspruch 25, wobei das n-fache das Vierfache ist.

28. Speichermedium nach Anspruch 23, wobei jedes Pixel, das den zweiten Wert einer Intensität besitzt, ein Hintergrund-Pixel ist, wobei jedes andere Pixel ein Objekt-Pixel ist, und ein Such-Gegenstand mathematisch als eine Kombination eines Stifts, eines Stabs, schwenkbar an dem Stift, und eines Rads, befestigt an dem Stab ungefähr einen Pixel-Raum von dem Stift entfernt, definiert ist, wobei der Stift so eingeschränkt ist, um sich unter Objekt-Pixeln zu bewegen, und das Rad so eingestellt ist, um sich unter Hintergrund-Pixeln zu bewegen, und die Einrichtung zum Skizzieren der binären Objekte, in Folge, aufweist:

eine Einrichtung zum Suchen in einer ersten Richtung von einer Ecke des Bildbereichs aus, um ein Anfangs-Objekt-Pixel zu lokalisieren;
eine Einrichtung zum Platzieren des Stifts an dem Anfangs-Pixel mit dem Rad in einem angrenzenden Hintergrund-Pixel;
eine Einrichtung zum Bewegen des Rads in einer Rad-Bewegung mit dem Stift beibehalten, wobei die Rad-Bewegung in einer zweiten Richtung entgegengesetzt der ersten Richtung vorliegt, bis das Rad durch ein Objekt-Pixel eingeschränkt ist;
eine Einrichtung zum Bewegen des Stifts in einer Stift-Bewegung mit dem Rad auf seinem letzten Hintergrund-Pixel beibehalten, wobei die Stift-Bewegung in der ersten Richtung zu einem nächsten Objekt-Pixel vorliegt, und, ohne dass der Stift eingeschränkt ist, weiteres Bewegen des Stifts, bis der Stift durch ein Hintergrund-Pixel eingeschränkt ist;
eine Einrichtung zum Erfassen, ob der Stift und das Rad jeweils simultan durch ein angrenzendes Objekt-Pixel und ein angrenzendes Hintergrund-Pixel eingeschränkt sind, und, falls der Stift und das Rad so eingeschränkt sind, eine Einrichtung zum Springen mit dem Rad über das angrenzende Objekt-Pixel zu einem nächsten Hintergrund-Pixel;
eine Einrichtung zum Wiederholen der Stift-Bewegung und der Rad-Bewegung alternierend, und Erfassen und Überspringen, falls simultan eine Einschränkung erfasst wird, bis das Anfangs-Objekt-Pixel erreicht ist;
eine Einrichtung zum Identifizieren aller Pixel, überquert durch den Stift, als Grenz-Pixel, um dadurch ein binäres Objekt zu skizzieren; und
eine Einrichtung zum weiteren Wiederholen der Suche, der Stift-Bewegung und der Rad-Bewegung, und der Erfassung und des Überspringens, falls eine simultane Einschränkung erfasst wird, und des Identifizierens, bis kein weiteres Anfangs-Pixel lokalisiert ist, um dadurch andere binäre Objekte zu skizzieren.

29. Speichermedium nach Anspruch 28, wobei die Einrichtung zum Suchen eine Einrichtung zum anfänglichen Kennzeichnen als ein Kanten-Pixel von jedem Objekt-Pixel, das mindestens ein benachbartes Hintergrund-Pixel besitzt, und eine Einrichtung zum Suchen nur nach Kanten-Pixeln, um ein Anfangs-Pixel zu lokalisieren, aufweist.

30. Speichermedium nach Anspruch 29, wobei die Grenz-Pixel jedes binären Objekts vor einem weiteren Suchen nach einem nächsten Anfangs-Pixel identifiziert werden, und die Einrichtung zum Identifizieren einer Einrichtung zum Zuordnen eines weiteren Werts zu jedem Grenz-Pixel aufweist, um so zugeordnete Kanten-Pixel von der weiteren Suche zu entfernen.

31. Speichermedium nach Anspruch 30, das weiterhin eine Einrichtung zum erneuten Zuordnen jedes Grenz-Pixel dem ersten Wert, nachdem kein weiteres Anfangs-Pixel lokalisiert ist, aufweist.

32. Speichermedium nach Anspruch 28, wobei die Einrichtung zum Identifizieren eine Einrichtung zum Zuordnen eines weiteren Werts zu jedem Grenz-Pixel aufweist.

33. Speichermedium nach Anspruch 29, das weiterhin eine Einrichtung zum Verwenden jedes weiteren Werts aufweist, um Grenz-Bilder anzuzeigen.

## Revendications

1. Procédé pour établir des limites d'objets dans une image numérique mémorisée associée à des pixels qui définissent une aire d'image, chaque pixel ayant une intensité associée qui correspond à l'arrière-plan ou à un objet dans l'image, de telle sorte que l'intensité totale d'une section de pixels est bimodale en étant représentative à la fois de l'intensité d'arrière-plan et de l'intensité d'objet, ou unimodale en étant représentative uniquement de l'intensité d'arrière-plan ou de l'intensité d'objet ; le procédé comprenant les étapes consistant :

- à diviser l'aire d'image en blocs ne se chevauchant pas (34), chacun étant formé d'une pluralité de pixels ;
- à identifier si chaque bloc a une intensité unimodale ou une intensité bimodale ;
- à calculer un seuil (44) pour chaque bloc ayant une intensité bimodale, de telle sorte que l'intensité sur un premier côté du seuil calculé est l'intensité d'arrière-plan et sur l'autre côté du seuil calculé, est l'intensité d'objet ;
- à désigner un seuil de bloc pour chaque bloc, le seuil de bloc pour une intensité bimodale étant le seuil calculé, et pour une intensité unimodale, étant un seuil assigné qui est dérivé des seuils de blocs voisins ;
- à dériver un seuil de pixel (71) pour chaque pixel à partir des seuils de blocs (63) ;
- à identifier (76), à partir du seuil de pixel (71), chaque pixel ayant une intensité d'objet et chaque pixel ayant une intensité d'arrière-plan, et à assigner (86) une première valeur (84) à chaque pixel ayant une intensité d'objet et une seconde valeur (88) à chaque pixel ayant une intensité d'arrière-plan, en convertissant ainsi les objets d'image en objets binaires ; et

- à tracer (90) les objets binaires afin d'établir ainsi les limites (92) des objets d'image.

2. Procédé selon la revendication 1, dans lequel l'étape de dérivation comprend l'interpolation d'un seuil de pixel pour chaque pixel à partir des seuils de blocs.

3. Procédé selon la revendication 1, dans lequel l'aire d'image a une intensité bimodale, et dans lequel :

- l'étape consistant à diviser l'aire d'image comprend la subdivision à n reprises de l'aire d'image en sections de n subdivisions ne se chevauchant pas, et, successivement, la subdivision à n reprises de chacune des sections un nombre sélectionné de fois jusqu'à ce que les sections finales définissent les blocs, chaque ensemble de sections de n subdivisions étant un ensemble de sections fils d'un père qui est l'aire d'image ou une section ;
- l'étape consistant à désigner un seuil assigné comprend l'identification que chaque section a une intensité unimodale ou une intensité bimodale, le calcul des seuils de l'aire d'image et de chaque section ayant une intensité bimodale, et la désignation de chaque seuil calculé en tant que seuil de section ; et
- l'étape consistant à désigner un seuil assigné comprend, en outre, pour chaque section ayant une intensité unimodale dans un ensemble de sections de n subdivisions, la désignation d'une moyenne des seuils calculés pour les autres sections de l'ensemble si lesdites autres sections ont une intensité bimodale, sinon, la désignation de l'intensité de seuil du père de l'ensemble, les seuils de sections étant successivement désignés au travers des subdivisions successives jusqu'à ce qu'un seuil de bloc soit désigné pour chaque bloc.

4. Procédé selon la revendication 3, dans lequel la moyenne des seuils calculés pour les autres sections de l'ensemble n'est désignée que si l'ensemble des autres sections de l'ensemble ont une intensité de seuil non nulle.

5. Procédé selon la revendication 3, dans lequel le facteur de subdivision n est quatre.

6. Procédé selon la revendication 1, dans lequel chaque pixel ayant la seconde valeur d'intensité est un pixel d'arrière-plan, chaque autre pixel est un pixel d'objet, et une entité de recherche est définie mathématiquement comme étant une combinaison d'un axe, d'une tige pouvant pivoter sur l'axe et d'une roue fixée sur la tige à environ une distance d'un pixel de l'axe, l'axe étant contraint de se déplacer parmi les pixels d'objet, et la roue étant contrainte de se déplacer parmi les pixels d'arrière-plan, l'étape consistant à tracer les objets binaires comprenant, de façon séquentielle :

- la recherche suivant une première direction à partir d'un coin de l'aire d'image afin de localiser un pixel initial d'objet, et le placement de l'axe sur le pixel initial, la roue se trouvant dans un pixel d'arrière-plan adjacent ;
- sauf en condition de contrainte, l'axe étant retenu, le déplacement de la roue s'effectuant suivant une seconde direction opposée à la première direction jusqu'à ce que la roue soit contrainte par un pixel d'objet ;
- sauf en condition de contrainte, la roue étant retenue sur son pixel d'arrière-plan le plus récent, le déplacement de l'axe s'effectuant suivant la première direction jusqu'à un objet de pixel suivant et, sauf en condition de contrainte, la répétition de l'étape consistant à déplacer l'axe jusqu'à ce que l'axe soit contraint par un pixel d'arrière-plan ;
- si l'axe et la roue sont respectivement contraints de façon simultanée par un pixel d'objet adjacent et un pixel d'arrière-plan adjacent, le saut de la roue par dessus le pixel d'objet adjacent jusqu'à un pixel d'arrière-plan suivant ;
- la répétition des étapes de déplacement et de saut jusqu'à ce que le pixel d'objet initial soit atteint ;
- l'identification de tous les pixels traversés par l'axe en tant que pixels de limites, traçant ainsi un objet binaire ; et
- la répétition, en outre, des étapes de recherche, de déplacement, d'identification et de saut jusqu'à ce qu'aucun autre pixel initial ne soit localisé, en traçant de la sorte les autres objets binaires.

7. Procédé selon la revendication 6, dans lequel l'étape de recherche comprend l'étiquetage initial en tant que pixel de bord de chaque pixel objet ayant au moins un pixel d'arrière-plan voisin, et la recherche uniquement des pixels de bord pour localiser un pixel initial.

8. Procédé selon la revendication 7, dans lequel les pixels de limites de chaque objet binaire sont identifiés avant la recherche d'un pixel initial suivant, et l'étape d'identification comprend l'assignation d'une autre valeur à chaque pixel de limite de façon à éliminer les pixels de bord associés de l'autre recherche.

9. Procédé selon la revendication 8, comprenant, en outre, la réassignation de chaque pixel de limite à la première valeur après qu'aucun autre pixel initial n'ait été localisé.

10. Procédé selon la revendication 6, dans lequel l'étape d'identification comprend l'assignation d'une autre valeur à chaque pixel de limite.

11. Procédé selon la revendication 10, comprenant, en outre, l'utilisation de chaque autre valeur pour afficher des images de limites.

12. Instrument (26) récepteur de lumière (28) à partir d'une pluralité d'échantillons (32) pour réaliser des objets d'image séparés en vue de leur analyse, l'instrument incluant un processeur (22) pour mettre en oeuvre cette analyse, le processeur comprenant :

- des moyens (18) pour mémoriser les objets dans une image numérique mémorisée associée à des pixels qui définissent une aire d'image, chaque pixel ayant une intensité associée qui correspond à l'arrière-plan ou à un objet dans l'image, de telle sorte que l'intensité totale d'une section de pixels est bimodale en étant représentative à la fois de l'intensité d'arrière-plan et de l'intensité d'objet, ou unimodale en étant représentative uniquement de l'intensité d'arrière-plan ou de l'intensité d'objet ;
- des moyens pour diviser l'aire d'image en des blocs ne se chevauchant pas (34), chacun étant formé d'une pluralité de pixels ;
- des moyens pour identifier si chaque bloc a une intensité unimodale ou une intensité bimodale ;
- des moyens pour calculer un seuil (44) pour chaque bloc ayant une intensité bimodale, de telle sorte que l'intensité sur un premier côté du seuil calculé est l'intensité d'arrière-plan et sur l'autre côté du seuil calculé, est l'intensité d'objet ;
- des moyens pour désigner un seuil de bloc pour chaque bloc, le seuil de bloc pour l'intensité bimodale étant le seuil calculé, et pour l'intensité unimodale, étant un seuil assigné dérivé des seuils de blocs voisins ;
- des moyens pour dériver un seuil de pixel (71) pour chaque pixel à partir des seuils de blocs (63) ;
- des moyens pour identifier (76), à partir du seuil de pixel (71), chaque pixel ayant une intensité d'objet et chaque pixel ayant une intensité d'arrière-plan, et pour assigner (86) une première valeur (84) à chaque pixel ayant une intensité d'objet et une seconde valeur (88) à chaque pixel ayant une intensité d'arrière-plan, en convertissant ainsi les objets d'image en objets binaires ; et

- des moyens pour tracer (90) les objets binaires afin d'établir de la sorte les limites (92) des objets d'image en vue de leur analyse.

13. Instrument selon la revendication 12, dans lequel les moyens pour dériver comprennent des moyens pour interpoler un seuil de pixel pour chaque pixel à partir des seuils de blocs.

14. Instrument selon la revendication 12, dans lequel l'aire d'image a une intensité bimodale, et dans lequel :

- les moyens pour diviser l'aire d'image comprennent des moyens pour subdiviser à n reprises l'aire d'image en sections de n subdivisions ne se chevauchant pas, et pour subdiviser, successivement, à n reprises, chacune des sections un nombre sélectionné de fois jusqu'à ce que les sections finales définissent les blocs, chaque ensemble des sections de n subdivisions étant un ensemble de sections fils d'un père qui est l'aire d'image ou d'une section ;
- les moyens pour désigner un seuil assigné comprennent des moyens pour identifier si chaque section a une intensité unimodale ou une intensité bimodale, des moyens pour calculer les seuils pour l'aire d'image et chaque section ayant une intensité bimodale, et des moyens pour désigner chaque seuil calculé comme étant un seuil de section ; et
- les moyens pour désigner un seuil assigné comprennent, en outre, pour chaque section ayant une intensité unimodale dans un ensemble de sections de n subdivisions, des moyens pour désigner une moyenne des seuils calculés des autres sections dans l'ensemble si lesdites autres sections ont une intensité bimodale, sinon, pour désigner l'intensité de seuil du père de l'ensemble, les seuils de sections étant successivement désignés au travers de subdivisions successives jusqu'à ce qu'un seuil de bloc soit désigné pour chaque bloc.

15. Instrument selon la revendication 14, dans lequel la moyenne des seuils calculés pour les autres sections de l'ensemble n'est désignée que si toutes les autres sections de l'ensemble ont une intensité de seuil non nulle.

16. Instrument selon la revendication 14, dans lequel le facteur n de subdivisions est quatre.

17. Instrument selon la revendication 12, dans lequel chaque pixel ayant la seconde valeur d'intensité est un pixel d'arrière-plan, chaque autre pixel est un pixel d'objet, et une entité de recherche est définie mathématiquement comme étant une combinaison d'un axe, d'une tige pouvant pivoter sur l'axe, et d'une roue fixée sur la tige à environ une distance d'un pixel de l'axe, l'axe étant contraint de se déplacer parmi les pixels d'objet, et la roue étant contrainte de se déplacer parmi les pixels d'arrière-plan, et les moyens pour tracer les objets binaires comprennent, de façon séquentielle :

- des moyens pour rechercher suivant une première direction à partir d'un coin de l'aire d'image afin de localiser un pixel initial d'objet ;
- des moyens pour placer l'axe sur le pixel initial, la roue se trouvant dans un pixel d'arrière-plan adjacent ;
- des moyens pour déplacer la roue selon un mouvement de roue, l'axe étant retenu, le mouvement de roue s'effectuant suivant une première direction opposée à la première direction jusqu'à ce que la roue soit contrainte par un pixel d'objet ;
- des moyens pour déplacer l'axe selon un mouvement d'axe, la roue étant retenue sur son pixel d'arrière-plan le plus récent, le mouvement d'axe s'effectuant selon la direction selon un premier sens jusqu'à un pixel d'objet suivant et, à moins que l'axe ne soit contraint, pour déplacer, plus avant, l'axe jusqu'à ce que l'axe soit contraint par un pixel d'arrière-plan ;
- des moyens pour détecter si l'axe et la roue sont respectivement contraints de façon simultanée par un pixel d'objet adjacent et un pixel d'arrière-plan adjacent, et, si l'axe et la roue sont ainsi contraints, des moyens pour faire sauter la roue par dessus le pixel d'objet adjacent jusqu'à un pixel d'arrière-plan suivant ;
- des moyens pour répéter le mouvement d'axe et le mouvement de roue en alternance, et la détection et le saut si une contrainte simultanée est détectée, jusqu'à ce que le pixel d'objet initial soit atteint ;
- des moyens pour identifier tous les pixels traversés par l'axe en tant que pixels de limites, en traçant ainsi un objet binaire ; et
- des moyens pour répéter, en outre, la recherche, le mouvement d'axe et le mouvement de roue, et la détection et le saut si la contrainte simultanée est détectée, et l'identification, jusqu'à ce qu'aucun autre pixel initial ne soit localisé, en traçant de la sorte les autres objets binaires.

18. Instrument selon la revendication 17, dans lequel les moyens de recherche comprennent des moyens pour étiqueter initialement en tant que pixel de bord chaque pixel d'objet ayant au moins un pixel d'arrière-plan voisin, et des moyens pour ne rechercher que les pixels de bord pour localiser un pixel initial.

**19.** Instrument selon la revendication 18, dans lequel les pixels de limites de chaque objet binaire sont identifiés avant la recherche ultérieure d'un pixel initial suivant, et les moyens pour identifier comprennent des moyens pour assigner une autre valeur à chaque pixel de limite de façon à éliminer les pixels de bord associés de l'autre recherche.

**20.** Instrument selon la revendication 19, comprenant, en outre, des moyens pour réassigner chaque pixel de limite avec la première valeur après qu'aucun autre pixel initial n'ait été localisé.

**21.** Instrument selon la revendication 17, dans lequel les moyens pour identifier comprennent des moyens pour assigner une autre valeur à chaque pixel de limite.

**22.** Instrument selon la revendication 21, comprenant, en outre, des moyens pour utiliser chaque autre valeur afin d'afficher des images de limites.

**23.** Support de mémoire pouvant être lu par un ordinateur en vue de son utilisation avec un instrument (26) récepteur de lumière (28) à partir d'une pluralité d'échantillons (32) pour réaliser des objets d'image séparés en vue de leur analyse, l'instrument incluant un processeur (22) destiné à cette analyse, les objets étant mémorisés dans le processeur dans une image numérique mémorisée associée à des pixels qui définissent une aire d'image, chaque pixel ayant une intensité associée qui correspond à l'arrière-plan ou à un objet dans l'image, de telle sorte que l'intensité totale d'une section de pixels est bimodale comme étant représentative à la fois de l'intensité d'arrière-plan et de l'intensité d'objet, ou bien unimodale comme étant représentative uniquement de l'intensité d'arrière-plan ou de l'intensité d'objet, et le support de mémoire ayant, incorporé en lui, un code de programme de façon qu'il puisse être lu par le processeur, dans lequel le code de programme comprend :

- des moyens pour diviser l'aire d'image en des blocs ne se chevauchant pas (34), chacun étant formé d'une pluralité de pixels ;
- des moyens pour identifier si chaque bloc a une intensité unimodale ou une intensité bimodale ;
- des moyens pour calculer un seuil (44) pour chaque bloc ayant une intensité bimodale, de telle sorte que l'intensité sur un premier côté du seuil calculé est l'intensité d'arrière-plan et sur l'autre côté du seuil calculé, est l'intensité d'objet ;
- des moyens pour désigner un seuil de bloc pour chaque bloc, le seuil de bloc pour l'intensité bimodale étant le seuil calculé, et pour l'intensité unimodale étant un seuil assigné dérivé des seuils de blocs voisins ;
- des moyens pour dériver un seuil de pixel (71) pour chaque pixel à partir des seuils de blocs (63) ;
- des moyens pour identifier (76), à partir du seuil de pixel (71), chaque pixel ayant une intensité d'objet et chaque pixel ayant une intensité d'arrière-plan, et pour assigner (86) une première valeur (84) à chaque pixel ayant une intensité d'objet et une seconde valeur (88) à chaque pixel ayant une intensité d'arrière-plan, en convertissant ainsi les objets d'image en objets binaires ; et
- des moyens pour tracer (90) les objets binaires afin d'établir de la sorte les limites (92) des objets d'image.

**24.** Support de mémoire selon la revendication 23, dans lequel les moyens pour dériver comprennent des moyens pour interpoler un seuil de pixel pour chaque pixel à partir des seuils de blocs.

**25.** Support de mémoire selon la revendication 23 dans lequel l'aire d'image a une intensité bimodale, et dans lequel :

- les moyens pour diviser l'aire d'image comprennent des moyens pour subdiviser à n reprises l'aire d'image en des sections de n subdivisions ne se chevauchant pas, et pour subdiviser, successivement, à n reprises chacune des sections un nombre sélectionné de fois jusqu'à ce que les sections finales définissent les blocs, chaque ensemble de sections de n subdivisions étant un ensemble de sections fils d'un père qui est l'aire d'image ou une section ;
- les moyens pour désigner un seuil assigné comprennent des moyens pour identifier si chaque section a une intensité unimodale ou une intensité bimodale, des moyens pour calculer des seuils de l'aire d'image et de chaque section ayant une intensité bimodale, et des moyens pour désigner chaque seuil calculé en tant que seuil de section ; et
- les moyens pour désigner un seuil assigné comprennent, en outre, pour chaque section ayant une intensité unimodale dans un ensemble de sections de n subdivisions, des moyens pour désigner une moyenne des seuils calculés pour les autres sections dans l'ensemble si lesdites autres sections ont une intensité bimodale, sinon, pour désigner l'intensité de seuil du père de l'ensemble, les seuils de sections étant successivement désignés au travers des subdivisions successives jusqu'à ce qu'un seuil de bloc soit désigné pour chaque bloc.

**26.** Support de mémoire selon la revendication 25, dans lequel la moyenne des seuils calculés pour les autres sections de l'ensemble n'est désignée que si toutes les autres sections de l'ensemble ont une intensité de seuil non nulle.

**27.** Support de mémoire selon la revendication 25, dans lequel le facteur n de subdivisions est quatre.

**28.** Support de mémoire selon la revendication 23, dans lequel chaque pixel ayant la seconde valeur d'intensité est un pixel d'arrière-plan, chaque autre pixel est un pixel d'objet, et une entité de recherche est définie mathématiquement comme étant une combinaison d'un axe, d'une tige pouvant pivoter sur l'axe, et d'une roue fixée sur la tige à environ une distance d'un pixel de l'axe, l'axe étant contraint de se déplacer parmi les pixels d'objets, et la roue étant contrainte de se déplacer parmi les pixels d'arrière-plan, et les moyens pour tracer les objets binaires comprennent, de façon séquentielle :

- des moyens pour rechercher suivant une première direction à partir d'un coin de l'aire d'image afin de localiser un pixel initial d'objet ;
- des moyens pour placer l'axe sur le pixel initial, la roue se trouvant dans un pixel d'arrière-plan adjacent ;
- des moyens pour déplacer la roue selon un mouvement de roue, l'axe étant retenu, le mouvement de roue s'effectuant suivant une seconde direction opposée à la première direction jusqu'à ce que la roue soit contrainte par un pixel d'objet ;
- des moyens pour déplacer l'axe selon un mouvement d'axe, la roue étant retenue sur son pixel d'arrière-plan le plus récent, le mouvement de l'axe s'effectuant selon la première direction jusqu'à un pixel d'objet suivant et, à moins que l'axe ne soit contraint, déplaçant, en outre, l'axe jusqu'à ce que l'axe soit contraint par un pixel d'arrière-plan ;
- des moyens pour détecter si l'axe et la roue sont respectivement contraints de façon simultanée par un pixel d'objet adjacent et un pixel d'arrière-plan adjacent, et, si l'axe et la roue sont de la sorte contraints, des moyens pour faire sauter la roue par dessus le pixel d'objet adjacent jusqu'à un pixel d'arrière-plan suivant ;
- des moyens pour répéter le mouvement de l'axe et le mouvement de la roue en alternance, et la détection et le saut si la contrainte simultanée est détectée, jusqu'à ce que le pixel d'objet initial soit atteint ;
- des moyens pour identifier tous les pixels traversés par l'axe en tant que pixels de limites, en traçant ainsi un objet binaire ; et
- des moyens pour répéter, en outre, la recherche, le mouvement de l'axe et le mouvement de roue, et la détection et le saut si la contrainte simultanée est détectée, et l'identification, à moins qu'aucun autre pixel initial ne soit localisé, en traçant ainsi les autres objets binaires.

**29.** Support de mémoire selon la revendication 28, dans lequel les moyens pour rechercher comprennent des moyens pour étiqueter initialement en tant que pixel de bord chaque pixel d'objet ayant au moins un pixel d'arrière-plan voisin, et des moyens pour ne rechercher que les pixels de bord pour localiser un pixel initial.

**30.** Support de mémoire selon la revendication 29, dans lequel les pixels de limites de chaque objet binaire sont identifiés avant la recherche ultérieure d'un pixel initial suivant, et les moyens pour identifier comprennent des moyens pour assigner une valeur suivante à chaque pixel de limite de façon à éliminer des recherches ultérieures, les pixels de bord associés.

**31.** Support de mémoire selon la revendication 30, comprenant, en outre, des moyens pour réassigner chaque pixel de limite à la première valeur après qu'aucun autre pixel initial n'ait été localisé.

**32.** Support de mémoire selon la revendication 28, dans lequel les moyens pour identifier comprennent des moyens pour assigner une autre valeur à chaque pixel de limite.

**33.** Support de mémoire selon la revendication 29, comprenant en outre, des moyens pour utiliser chaque autre valeur afin d'afficher les images de limites.

FIG.1

FIG.2

FIG.3

FIG.4

FIG.5

FIG.6

FIG.7

FIG.8

FIG.9

FIG.10

FIG.11